# EUROPEAN PATENT SPECIFICATION

(11) **EP 4 461 831 B1**
(45) Date of publication and mention of the grant of the patent: **29.07.2026**
(21) Application number: 23737301.4
(22) Date of filing: 06.01.2023
(51) Int. Cl.: C23C 2/28, C22C 38/20, C23C 2/40, C23C 2/26, C23C 2/06, C22C 38/28, C22C 38/10, C22C 38/16, C22C 38/14, C21D 9/46, C22C 38/12, B32B 15/01, C22C 18/00, C22C 38/60, C21D 1/673, C23C 2/02, C21D 1/18, C21D 1/26, C21D 1/76, C21D 8/02

(54) **STEEL SHEET FOR HOT-STAMPING, METHOD FOR MANUFACTURING STEEL SHEET FOR HOT-STAMPING, AND HOT-STAMPED FORMED BODY**
STAHLBLECH ZUM HEISSPRÄGEN, VERFAHREN ZUR HERSTELLUNG EINES STAHLBLECHS ZUM HEISSPRÄGEN UND HEISSGEPRÄGTER FORMARTIKEL
TÔLE D'ACIER POUR ESTAMPAGE À CHAUD AINSI QUE PROCÉDÉ DE FABRICATION DE CELLE-CI, ET CORPS MOULÉ PAR ESTAMPAGE À CHAUD

(30) Priority: 06.01.2022 JP 2022001024
(43) Date of publication of application: 13.11.2024
(73) Proprietor: NIPPON STEEL CORPORATION, Chiyoda-ku Tokyo 100-8071 (JP)
(72) Inventor: AZUMA, Masafumi, Tokyo 100-8071 (JP); SENGOKU, Akihiro, Tokyo 100-8071 (JP); KIKUCHI, Shota, Tokyo 100-8071 (JP)
(74) Representative: Zimmermann & Partner Patentanwälte mbB
(86) International application number: PCT/JP2023/000116
(87) International publication number: WO 2023/132350

(56) References cited:
- WO-A1-2021/145442
- WO-A1-2021/193632
- WO-A1-2021/251275
- JP-A- 2015 196 844
- US-A1- 2010 294 400
- US-A1- 2011 219 782
- US-A1- 2016 002 762
- US-A1- 2020 216 925
- T. TAYLOR ET AL: "Critical review of automotive hot-stamped sheet steel from an industrial perspective", MATERIALS SCIENCE AND TECHNOLOGY, vol. 34, no. 7, 18 January 2018 (2018-01-18), GB, pages 809 - 861, XP055711575, ISSN: 0267-0836, DOI: 10.1080/02670836.2018.1425239

## Description

### [Technical Field]

The present invention relates to a steel sheet for hot-stamping, a manufacturing method thereof, and a hot-stamped formed body.

Priority is claimed on Japanese Patent Application No. 2022-001024, filed January 06, 2022.

### [Background Art]

Weight reduction of components such as door guard bars and side members of automobiles has been examined weight reduction to respond to trends in reducing fuel consumption in recent years. In terms of materials, reduction of thickness is effective for weight reduction. However, if materials are simply made thinner, the load-bearing capacity of components decreases. Therefore, to secure strength and collision safety even with reduction of thickness, there has been a demand for high strength steel sheets used as materials for automobile parts.

However, formability of a material generally deteriorates as its strength increases. Therefore, to achieve the weight reduction of the above-described components, it is required for steel sheets used as materials thereof to have both excellent formability and high strength.

As a steel sheet having high strength and excellent formability at the same time, there is, for example, transformation induced plasticity (TRIP) steel which utilizes the martensitic transformation of residual austenite disclosed in Patent Documents 1 and 2, and applications of this TRIP steel have been expanding in recent years. However, TRIP steel has a problem that, although deep drawability and elongation during forming are improved, the shape fixability of a component after press forming is poor because the steel sheet strength is high.

In addition, Patent Documents 3 and 4 disclose ultra-high tensile strength steel sheets for cold pressing with a tensile strength of 1470 MPa or more. However, these steel sheets are subject to significant blade wear during shear cutting and trimming, although consideration is given to hydrogen embrittlement due to cold working. Alternatively, there is a problem that the pressing load is too high for cold pressing and it is difficult to perform cold rolling. Therefore, there is a major problem in making steel sheets for automobile parts even stronger.

For such problems, as shown in Patent Document 5, there exists a method called hot stamping in which, after cutting a soft steel sheet into a predetermined size, the steel sheet is heated to an austenitic single phase range of 800°C or higher, press forming is carried out in an austenitic single phase range as disclosed in Patent Document 5, and then quenching is carried out. By applying this hot stamping, it is possible to manufacture components with a high strength of 980 MPa or more and excellent shape fixability while suppressing wear due to shearing and trimming and suppressing the press load.

However, in hot stamping, the steel sheet is heated to a high temperature exceeding 800°C by being inserted into a heating furnace, or through electrical heating or far-infrared heating in atmospheric air. Therefore, there is a problem that even if plating is applied to the surface of a steel sheet for hot-stamping, a reaction between the plating and a base steel proceeds and the properties of the plating are lost. Therefore, there is a problem that plating steel sheets used for hot stamping (steel sheets for hot-stamping) could be utilized from the viewpoint of scale suppression, but might not contribute sufficiently to securing the rust resistance of formed bodies after hot stamping.

In response to these problems, in Patent Documents 6 and 7, hot-stamped formed bodies are disclosed in which zinc plating containing 9 mass% to 30 mass% of Fe is formed with a coating amount of 30 g/m² or more by suppressing volatilization of zinc by incorporating Si or Al into the plating layer.

The hot-stamped formed bodies of Patent Documents 6 and 7 can secure zinc plating in the formed bodies by suppressing the volatilization of zinc. However, even if zinc volatilization is suppressed, there is a problem that it is difficult to stably control the mass of Fe in the galvanized layer to be within the range of 9 mass% to 30 mass% because the alloying reaction between Fe and zinc proceeds during heating of hot stamping. In particular, when the heating temperature becomes high or the heating time becomes long, there is a problem that the alloying reaction between Fe and zinc proceeds excessively, and Fe in the galvanized layer becomes more than 30 mass%, resulting in loss of rust resistance. In addition, since the alloying reaction between Fe and Zn occurs unevenly from the interface between the plating layer and a base material, unevenness is formed on the surface of the plating layer along with the alloying reaction, and the film thickness of an electrodeposition coating, which is indispensable as a rust prevention treatment for automobile parts, becomes uneven. In other words, when the surface after the electrodeposition coating is flat, the electrodeposition film thickness of the convex portion of the plating layer becomes thin, and as a result, there is a problem such as a decrease in corrosion resistance due to peeling of the coating film. Therefore, it is necessary to solve the above-described problems. US 2016002762 discloses a galvanized steel sheet with good corrosion resistance for automotive application.

### [Citation List]

### [Patent Documents]

[Patent Document 1]
   Japanese Unexamined Patent Application, First Publication No. H1-230715
[Patent Document 2]
   Japanese Unexamined Patent Application, First Publication No. H2-217425
[Patent Document 3]
   Japanese Patent No. 6354921
[Patent Document 4]
   Japanese Patent No. 5365216
[Patent Document 5]
   Japanese Patent No. 3582512
[Patent Document 6]
   Japanese Patent No. 4671634
[Patent Document 7]
   Japanese Patent No. 4733522

### [Summary of the Invention]

### [Problems to be Solved by the Invention]

As described above, there are problems in stable manufacturing of hot-stamped formed bodies having excellent rust resistance including corrosion resistance and adhesion of coating film in the conventional art.

In view of the above-described circumstances, an object of the present invention is to provide a hot-stamped formed body being little influenced by heating conditions during hot-stamping (it is possible to manufacture it under a wide range of heating conditions) and excellent rust resistance, a steel sheet for hot-stamping suitable as a material of the hot-stamped formed body, and a method for manufacturing a steel sheet for hot-stamping.

### [Means for Solving the Problem]

The present inventors have conducted extensive studies to solve the above-described problems. As a result, it has been found that the alloying reaction between Fe (iron) and Zn (zinc) is delayed by concentrating B in the galvanized layer of the steel sheet for hot-stamping, that hot-stamping formed body having a plating layer having a Γ phase containing 9 to 30 mass% of Fe could be obtained within a wide range of hot-stamping heat treatment conditions, and that in this hot-stamped formed body, corrosion resistance is high and peeling of a coating film during chemical conversion treatment and electrodeposition treatment could be suppressed.

The present invention has been made based on the above-described findings, and is asin the appended independent claims. Preferred embodiments are set out in the dependent claims.

### [Effects of the Invention]

According to the above-described aspect of the present invention, it is possible to provide a hot-stamped formed body having excellent rust resistance (corrosion resistance and adhesion of coating film), a steel sheet for hot-stamping suitable as a material for the hot-stamped formed body, and a method for manufacturing the steel sheet for hot-stamping.

### [Embodiment of the Invention]

Hereinafter, a steel sheet for hot-stamping according to one embodiment of the present invention (steel sheet for hot-stamping according to the present embodiment), a hot-stamped formed body according to one embodiment of the present invention (hot-stamped formed body according to the present embodiment), and manufacturing methods thereof will be sequentially described.

### [Steel sheet for hot-stamping]

The steel sheet for hot-stamping according to the present embodiment includes a base steel sheet and a galvanized layer formed on the surface of the base steel sheet. The galvanized layer may be formed on a single surface or both surfaces of the base steel sheet.

### <Base steel sheet>

### <<Microstructure>>

In the steel sheet for hot-stamping according to the present embodiment, a microstructure at a position at 1/4 depth which is in a range of 1/8 to 3/8 of a sheet thickness in a sheet thickness direction from the surface of the base steel sheet contains, in volume fraction, ferrite: 20% to 95% and pearlite: 5% to 80%, the remaining structure including bainite.

The microstructure at a position at 1/4 depth is defined because the microstructure at this position is a representative microstructure of a steel sheet and strongly correlates with the properties.

If the volume fraction of ferrite is less than 20%, the proportion of hard structures such as martensite and bainite becomes too high, and workability degrades. On the other hand, if the volume fraction of ferrite exceeds 95%, the volume fraction of pearlite, which becomes austenite during hot stamping heat treatment and becomes martensite during mold quenching, cannot be secured at 5% or more. In this case, the strength of a hot-stamped formed body obtained after hot stamping decreases, and sufficient strength cannot be obtained as the hot-stamped formed body. Therefore, the volume fraction of ferrite is set to be 20% to 95%.

Since pearlite contains a carbide, it contributes to high strength through hot stamping (heating and quenching). When the volume fraction of pearlite is less than 5%, the strength increase through hot stamping becomes insufficient and the strength of a hot-stamped formed body decreases. Therefore, the volume fraction of pearlite is set to be 5% or more. The volume fraction of pearlite is preferably 9% or more and more preferably 13% or more. On the other hand, when the pearlite volume fraction exceeds 80%, the ferrite volume fraction falls below 20%. Therefore, the volume fraction of pearlite is set to be 80% or less. Here, pearlite refers to a layered structure of ferrite and cementite. In the present embodiment, even if a portion of the cementite is divided or spheroidized, it is determined as pearlite.

The total volume fraction of ferrite and pearlite is preferably 95% or more.

The microstructure may contain 5% or less of bainite in volume fraction as a remainder other than ferrite and pearlite. Since bainite is a hard microstructure next to ferrite and pearlite, it may be incorporated as long as it does not increase the strength of the steel sheet for hot-stamping to a significant degree. The volume fraction of bainite exceeding 5% increases the strength of the steel sheet unnecessarily. The volume fraction of bainite is preferably 2% or less and may be 0%.

In the steel sheet for hot-stamping according to the present embodiment, a sample is collected using a cross section of the sheet thickness parallel to the rolling direction of the steel sheet as an observation surface, the observation surface is polished and subjected to nital etching, and the area of 1/8 to 3/8 of the sheet thickness from the surface centered at the 1/4 position of the sheet thickness in the sheet thickness direction from the surface is observed using a field emission scanning electron microscope (FE - SEM) to measure the area proportion and take it as volume fraction.

At the time of measuring the area proportion, 10 fields of view are observed with a field size of 1,000 µm² or more at a magnification of 3000 times, and an average value thereof is regarded as an area proportion. Ferrite, pearlite and bainite can also be determined by the following characteristics.

Ferrite is a bcc phase which is an equiaxed grain without a carbide inside. Pearlite is a layered structure of a bcc phase and cementite and can be distinguished through observation with an electron microscope. For bainite, there is upper bainite with cementite between laths of a bcc phase with a lath-like form and lower bainite with cementite having a single orientation relationship (having the same variant) within the laths, and either microstructure can be distinguished through electron microscope observation. Since both the upper bainite and the lower bainite are hard and bring about high strength of the steel sheet for hot-stamping, they are both bainite in the present embodiment. For martensite, there is fresh martensite consisting of a bct phase or bcc phase having a lath-like form and containing no carbide and tempered martensite containing cementite (iron-based carbides) with multiple orientation relationships (lower bainite also contains cementite within laths, but differs in that it has only one orientation relationship), and either can be distinguished through electron microscope observation. The volume fraction of martensite does not need to be measured here, but can also be measured through this method.

### <<Chemical composition>>

The chemical composition of the base steel sheet of the steel sheet for hot-stamping according to the present embodiment will be described. Hereinafter, % for the content of each element means mass%.

### C: 0.030% to 0.600%

C is an effective element to increase the strength of steel. When the C content is less than 0.030%, the maximum tensile strength (tensile strength) of a hot-stamped formed body cannot be sufficiently secured. For this reason, the C content is set to 0.030% or more. The C content is preferably 0.050% or more and more preferably 0.080% or more.

On the other hand, if the C content exceeds 0.600%, the weldability or workability becomes insufficient. For this reason, the C content is set to 0.600% or less. The C content is preferably 0.550% or less and more preferably 0.500% or less.

### Si: 0.01% to 1.50%

Si is a solid-solution strengthening element. Since an increase in strength becomes significant when the Si content is 0.01% or more, the Si content is set to 0.01% or more.

On the other hand, when the Si content exceeds 1.50%, not only the effect is saturated but also the Ac3 point is raised and it is not preferable because it is necessary to increase the heating temperature during hot stamping forming. For this reason, the Si content is set to 1.50% or less.

### Mn: 0.10% to 2.50%

Mn is an element that enhances hardenability. By setting the Mn content to 0.10% or more, the ferrite transformation in a cooling process during hot stamping is delayed, and the martensite volume fraction of the hot-stamped formed body can be set to 5% or more. For this reason, the Mn content is set to 0.10% or more.

On the other hand, there is a concern that if the Mn content exceeds 2.50%, the hardenability becomes too high and the strength of the hot-rolled steel sheet becomes too high, causing the sheet to fracture when cold-rolled. For this reason, the Mn content is set to 2.50% or less.

### Al: 0.001% to 0.100%

Al is an element that acts as a deoxidizing material. If the Al content is less than 0.001%, a sufficient deoxidation effect cannot be obtained, and a large amount of inclusions (oxides) is present in the steel sheet. These inclusions are not preferable because they are the origin of destruction during hot stamping and cause fracture. For this reason, the Al content is set to 0.001% or more. The Al content is preferably 0.005% or more.

On the other hand, if the Al content exceeds 0.100%, the Ac3 point is raised, it is necessary to increase the heating temperature during hot stamping, and productivity is reduced. For this reason, the Al content is set to 0.100% or less.

### Ti: 0.010% to 0.100%

Ti is an element that contributes to the increase in the strength and toughness of the hot-stamped formed body through fine grain strengthening by suppressing grain growth of austenite in a heating process during hot stamping. In addition, Ti is an element that inhibits B from forming a nitride by binding to N and forming TiN. To obtain this effect, the Ti content is set to 0.010% or more. The Ti content is preferably 0.012% or more and more preferably 0.015% or more.

On the other hand, there is a concern that if the Ti content exceeds 0.100%, Ti carbide is formed, the amount of C that contributes to strengthening martensite is reduced, and the strength of the hot-stamped formed body decreases. For this reason, the Ti content is set to 0.100% or less. The Ti content is preferably 0.080% or less and more preferably 0.060% or less.

### B: 0.0005% to 0.0100%

B is an effective element to diffuse into a plating layer during hot stamping, to delay a reaction between Fe and Zn during hot stamping, and to improve corrosion resistance and adhesion of coating film. To obtain these effects, the B content is set to 0.0005% or more. The B content is preferably 0.0007% or more and more preferably 0.0009% or more. In the steel sheet for hot-stamping according to the present embodiment, even if B is added to a plating bath, B cannot be stably contained in the plating layer because oxidation or the like occurs. For this reason, B is contained in the plating layer such that B is contained in the base steel sheet and is concentrated on the surface of the steel sheet through an annealing process and then plated as described below.

On the other hand, if the B content exceeds 0.0100%, not only the effect is saturated, but also iron-based borides precipitate and the hardenability improvement effect of B is not obtained. For this reason, the B content is set to 0.0100% or less. The B content is preferably 0.0080% or less, more preferably 0.0060% or less, and still more preferably 0.0030% or less.

### P: 0.100% or less

P is an element that is segregated near the center portion of the sheet thickness of the steel sheet and also an element that makes a welded part embrittle. Therefore, it is preferable to have a smaller P content. If the P content exceeds 0.100%, embrittlement of a welded part becomes noticeable, and therefore the P content is set to 0.100% or less. The P content is preferably 0.080% or less and more preferably 0.050% or less. The lower limit of the P content need not be particularly specified (it may be 0%), but since reducing the P content to less than 0.001% is economically disadvantageous, the P content may be set to 0.001% or more.

### S: 0.0100% or less

S is an element that adversely affects weldability and manufacturability during casting and hot rolling. Therefore, it is preferable to have a smaller S content. If the S content exceeds 0.0100%, the above-described adverse effect becomes noticeable, and therefore the S content is set to 0.0100% or less. The lower limit of the S content need not be particularly specified (it may be 0%), but since reducing the S content to less than 0.0001% is economically disadvantageous, the S content may be set to 0.0001% or more.

### N: 0.0150% or less

N is an element that forms coarse nitrides and degrades bendability and hole expandability. N is also an element that causes blowholes during welding. It is preferable to have a smaller N content. If the N content exceeds 0.0150%, the bendability and the hole expandability deteriorate significantly. For this reason, the N content is set to 0.0150% or less. The lower limit of the N content need not be particularly specified (it may be 0%), but if the N content is reduced to less than 0.0001%, manufacturing costs increases significantly, and therefore the N content may be 0.0001% or more or 0.0005% or more.

### O: 0.0100% or less

O is an element that forms an oxide and is present as an inclusion in steel. This inclusion leads to property degradation of steel sheets for hot-stamping. It is preferable to have a smaller O content (it may be 0%). If the O content exceeds 0.0100%, the above-described trend becomes significant. For this reason, the O content is set to 0.0100% or less. The O content is preferably 0.0050% or less.

On the other hand, reducing the O content to less than 0.0001% leads to excessive cost increases and is not economically preferable. Therefore, the O content may be set to 0.0001% or more.

The oxide described herein is an oxide present as an inclusion in a steel sheet and is different from a scale formed during hot stamping. In addition, since the steel sheet for hot-stamping according to the present embodiment has a galvanized layer, it is possible to suppress formation of iron oxides on the surface of the base steel sheet.

In the chemical composition of the base steel sheet of the steel sheet for hot-stamping according to the present embodiment, the remainder other than the above-described elements may be Fe and impurities. On the other hand, if necessary, the following elements (optional elements) may be further contained. Since optional elements may not be necessarily contained, the lower limit of all of them is 0%. In addition, even if the amount thereof is below the range in which a clear effect is obtained, it does not adversely affect the properties of the steel sheet for hot-stamping according to the present embodiment.

### Nb: 0% to 0.050%

### V: 0% to 0.500%

### W: 0% to 0.500%

Nb, V and W are elements that contribute to the increase in the strength and toughness through fine grain strengthening by suppressing grain growth of austenite in a heating process during hot stamping. Therefore, these may be contained. To obtain this effect, the amount of each of Nb, V and/or W is preferably 0.005% or more. More preferably, the Nb content, the V content, and the W content are each 0.010% or more.

On the other hand, if the Nb content exceeds 0.050%, or the V content or the W content exceeds 0.500%, carbides of these elements are formed and the amount of C contributing to strengthening of martensite is reduced, which causes the strength of the hot-stamped formed body to decrease. Therefore, the Nb content is set to 0.050% or less, and the V content and the W content are each set to 0.500% or less.

### Cr: 0% to 1.00%

### Mo: 0% to 0.50%

### Co: 0% to 1.000%

### Ni: 0% to 1.00%

### Cu: 0% to 1.00%

Cr, Mo, Co, Ni, and Cu are all elements that enhance hardenability during hot stamping, promote the formation of martensite, and contribute to high strength of hot-stamped formed bodies. This effect is significantly achieved by incorporating 0.001% or more of Co and/or one or more of 0.01% or more of each of Cr, Mo, Ni, Cu. Therefore, it is preferable to set the Co content to 0.001% or more, and each of the Cr content, the Mo content, the Ni content, and the Cu content to 0.01% or more.

On the other hand, if the amount of these elements becomes excessive, weldability, hot workability, and the like deteriorate, or the strength of the steel sheet for hot-stamping becomes too high, causing manufacturing troubles. Therefore, each of the Cr content, the Cu content, and the Ni content is set to 1.00% or less, the Co content is set to 1.000% or less, and the Mo content is set to 0.50% or less.

### REM: 0% to 0.0100%

### Zr: 0% to 0.0500%

### Ca: 0% to 0.0100%

### Mg: 0% to 0.0100%

For the purpose of improving the toughness of the hot-stamped formed body, one or more of REM, Zr, Ca, and Mg may be further contained. To obtain a sufficient effect, it is preferable to contain one or more of REM, Zr, Ca, and Mg at 0.0003% or more. Because these elements have a strong binding force to oxygen or S, these transform coarse oxides or sulfides formed in the steel sheet into fine oxides, thereby contributing to improving the toughness of hot-stamped formed body and suppressing fracture during collision deformation.

On the other hand, if the REM content, the Ca content, and the Mg content each exceed 0.0100%, or if the Zr content exceeds 0.0500%, the castability and the hot workability deteriorates. Therefore, the REM content, the Ca content, and the Mg content are each set to 0.0100% or less, and the Zr content is set to 0.0500% or less.

In the present embodiment, REM stand for rare earth metals and refer to Y and elements belonging to the lanthanoid series including La and Ce. The REM is often incorporated as mischmetal, and in addition to La and Ce, it may also contain complex elements of the lanthanide series.

### As: 0% to 0.100%

### Sn: 0% to 0.50%

### Sb: 0% to 0.50%

For the purpose of further improving the rust resistance, one or more of As, Sn, and Sb may be further contained. To obtain this effect, it is preferable to set the As content to 0.020% or more and/or each of the Sn content and the Sb content to 0.02% or more.

On the other hand, if the As content exceeds 0.100%, the Sn content exceeds 0.50%, or if the Sb content exceeds 0.50%, the castability and the hot workability deteriorates. Therefore, the As content is set to 0.100% or less, and the Sn content and the Sb content are each set to 0.50% or less.

The above-described chemical composition may be measured by a general analysis method. For example, the chemical composition may be measured through Inductively Coupled Plasma-Atomic Emission Spectrometry (ICP-AES). C and S may be measured through a combustion-infrared absorption method, and N may be measured through an inert gas fusion-thermal conductivity method. In the steel sheet for hot-stamping according to the present embodiment, the chemical composition (element concentration) of the surface layer portion of the base steel sheet is different from that at a position at 1/4 depth or at an average value throughout the thickness because B in the surface layer portion of the steel sheet is concentrated in the plating layer or at an interface with the plating layer through atmosphere control during annealing. Therefore, after removing a 150 µm area from the surface of the base steel sheet through polishing, component analysis is carried out. If the above-described region is to be removed, it may be removed either at a position at 1/4 depth or at an average throughout the thickness.

In the steel sheet for hot-stamping according to the present embodiment, B in the surface layer portion of the base steel sheet is concentrated on the surface and B concentrated on the surface is diffused in the plating layer as described below. Therefore, in the surface layer portion of the steel sheet for hot-stamping, there may be an area in which the B content (concentration) has decreased.

Specifically, the B content at a position of 10 µm in the depth direction (sheet thickness direction) from the surface of the base steel sheet may be 0.80 times (80%) or less of the B content at a position at 1/4 depth of the sheet thickness of the base steel sheet.

In this case, in addition to the fact that B is sufficiently diffused in the plating layer, by suppressing an alloying reaction between a galvanized layer and the base steel sheet during hot stamping heat treatment, it is possible to make the coating amount of a Γ layer having a Fe content of 9 to 30 mass% to 40 g/m² or more, which is preferable because a hot-stamped formed body having excellent rust resistance can be obtained.

On the other hand, adding B to a plating bath is also considered as a method of incorporating B into the plating bath. However, as a result of examination by the present inventors, B becomes a compound such as an oxide due to a high temperature of the plating bath, and the alloying reaction between the galvanized layer and the base steel sheet during hot stamping heat treatment cannot not be suppressed because the oxide cannot be concentrated as B in the plating layer.

The B content in mass% at a depth of 10 µm from the surface of the base steel sheet can be measured by cutting out a 50 mm wide × 50 mm long test piece from the steel sheet for hot-stamping and measuring the B content in mass% through GDS.

### <Galvanized layer>

### <<Coating amount>>

The coating amount of the galvanized layer formed on the surface of the base steel sheet is 90 g/m² or more per one surface.

In particular, when used for visible parts such as B-pillar outer, in addition to normal suppression of swelling of a coating film, high rust resistance such as suppression of red rust caused by corrosion are required. To secure the rust resistance of a hot-stamped formed body obtained through hot stamping of a steel sheet for hot-stamping on the assumption of the above-described application, in a plating layer of the hot-stamped formed body, it is necessary for the coating amount of a Γ layer which is a layer including a Γ phase having 9 to 30 mass% of Fe among alloy layers of Zn and Fe to be 40 g/m² or more.

In the steel sheet for hot-stamping according to the present embodiment, as described below, B is contained in the galvanized layer to delay a reaction between Fe and zinc (Zn). Nevertheless, if the coating amount of the galvanized layer is less than 90 g/m², the alloying reaction between iron and zinc proceeds excessively during hot stamping heat treatment, and it may not be possible to secure a Γ layer of 40 g/m² or more in the hot-stamped formed body. Therefore, the coating amount of the galvanized layer is set to 90 g/m² or more. The coating amount is preferably 95 g/m² or more.

### <<Chemical composition>>

When the maximum value of the B content in the galvanized layer is Bps and the B content at the position at 1/4 depth of the base steel sheet is Bqs, Bps is 1.2 times or more than Bqs.

B concentrated in the plating layer delays the alloying reaction between Fe and Zn and contributes to securing the coating amount of the Γ layer at 40 g/m² or more after hot stamping (hot-stamped formed body). This is because B forms a concentrated layer on the steel sheet surface during the heat treatment process and the alloying reaction between iron and zinc during hot stamping heat treatment are delayed.

In the steel sheet for hot-stamping according to the present embodiment, B in the galvanized layer needs to be diffused from the steel sheet to the galvanized layer during heat treatment. On the other hand, an excessive B content in the steel sheet leads to formation of borides in the steel and disturbs the concentration of B in the galvanized layer during heat treatment. In addition, the excessive B content in the steel makes the hot rolled steel sheet excessively strong and embrittle, making subsequent processes such as cold rolling and pickling difficult.

By setting the ratio of the maximum value (peak concentration) Bps of B in the galvanized layer to the B content Bqs at a position at 1/4 depth of the base steel sheet at 1.2 times or more, a sufficient alloying delay effect can be obtained, and the coating amount of the Γ layer can be secured at 40 g/m² or more in the hot-stamped formed body. If the Bps/Bqs is less than 1.2, a sufficient effect cannot be obtained.

An upper limit is not specified, but from the viewpoint of economic rationality, it is preferably 5.0 or less since excessive concentration not only saturates the effect, but also increases the heat treatment time required for concentration too much.

As a result of examination by the present inventors, it has been found that even if B is added to the plating bath, B cannot be stably contained in the plating layer because oxidation or the like occurs. Therefore, by concentrating B contained in the steel sheet on the steel sheet surface in an annealing process and performing plating in the state, B is contained in the plating layer.

The Bps/Bqs is obtained through the following method.

When measuring Bps, the maximum value Bps of the B content in the galvanized layer in mass% can be measured by cutting out a 50 mm × 50 mm test piece from the steel sheet for hot-stamping and performing elemental analysis from the surface layer through glow discharge emission analysis (GDS). Whether the subject is a galvanized layer or a base steel sheet may be identified by judging that an area where the concentration of Zn is 70 mass% or more is a galvanized layer.

For the B content in mass% at a position at 1/4 depth of the base steel sheet, a 50 mm wide × 50 mm long test piece is cut out from the hot-stamped formed body, polishing is performed to the 1/4 depth position of the base steel sheet, and then the B content is measured in mass% through GDS.

In the measurement, the average value of the B contents within a range from a position of 10 µm to a position of 20 µm in the sheet thickness direction from the polished surface is set to Bqs. The B content is measured at these positions because the polished test specimen may have adherents on the surface and may lack quantification. However, if adherents can be removed, the average value of the B contents at positions of 0 to 10 µm from the polished surface can also be set to Bqs. The average content in the range of 10 µm (10 to 20 µm, or 0 to 10 µm) in the sheet thickness direction is set to Bqs to remove the influence of slight segregation formed during casting. On the other hand, while expanding the measurement range in the sheet thickness direction is advantageous in terms of accuracy, expanding the measurement range in the sheet thickness direction leads to longer measurement time. The measurement of elemental distribution in the sheet thickness direction through GDS should be limited to 100 µm because the larger the measurement area in the depth direction, the longer time is required.

The chemical composition of the galvanized layer of the steel sheet for hot-stamping according to the present embodiment, as long as the above-described Bps/Bqs is satisfied and zinc is contained, is set to, in mass%, B: 0.0005% to 0.0500%, Al: 0% to 1.00%, Fe: 0.1% to 20.0%, Si: 0% to 1.0%, Mg: 0 to 0.5%, Mn: 0 to 0.5%, Pb: 0 to 0.5%, Sb: 0 to 0.5%, and the remainder: Zn and impurities. The Zn content is preferably set to 80.0% or more and more preferably set to 85.0% or more.

In particular, Al contributes to securing a Γ layer in the hot-stamped formed body at 40 g/m² or more by forming an oxide on the surface layer during hot stamping heat treatment and preventing evaporation of Zn during hot stamping heat treatment. Therefore, Al does not have to be contained, but for the purpose of securing the stability of the Γ layer in the hot-stamped formed body, it is preferable to set the Al content to 0.01% or more. On the other hand, if the A1 content exceeds 1.00%, the formation of Al oxides becomes more significant during hot stamping, and the risk of generation of problems such as adverse effects on weldability and wear on press molds due to the formed oxides increases. Therefore, the Al content is set to 1.00% or less. The Al content is more preferably 0.40% or less and even more preferably 0.35% or less.

In the chemical composition of the galvanized layer, if the Fe content is less than 9.0%, the Fe content in the galvanized layer of the steel sheet for hot-stamping is small, and even if the alloying reaction between Fe and Zn proceeds during hot stamping heat treatment, the time when the Fe content in the plating layer becomes 30% or less is expanded. This is preferable in that it is easier to secure a large amount of Γ layer after hot stamping heat treatment. The Fe content in the plating layer can be controlled by alloying heat treatment after immersion in the plating bath. However, in the steel sheet for hot-stamping according to the present embodiment, it is desirable that no alloying heat treatment be performed or alloying heat treatment be performed at a temperature of 490°C or lower because it is desirable to reduce the Fe content in the plating layer to form a Γ layer after hot stamping heat treatment.

The chemical composition of the galvanized layer and the coating amount can be obtained through the following method.

The coating amount can be calculated and obtained from the weight change before and after dissolution by dissolving the entire galvanized layer by immersing it in a 5% HCl solution containing 0.02% of an inhibitor (IBIT 700A, Asahi Chemical Co., Ltd.), which inhibits dissolution of Fe in steel sheets, for 10 minutes at room temperature. Whether or not the dissolution of the galvanized layer has been completed is determined based on the completion of foaming caused by hydrogen generation during dissolution. The chemical composition of the galvanized layer is measured by subjecting the solution which dissolved the above-described galvanized layer to ICP analysis. The chemical composition measured through this method is the average chemical composition of the galvanized layer.

### <Strength of steel sheet for hot-stamping>

The steel sheet for hot-stamping according to the present embodiment can secure excellent rust resistance after hot stamping regardless of its strength. However, although high strength is required to be ensured for a formed body after hot stamping, it is required for the steel sheet for hot-stamping to be easily cut or press-formed. For this reason, it is not preferable to increase the strength of the steel sheet for hot-stamping used for cutting and press forming. Therefore, the tensile strength of the steel sheet for hot-stamping is desirably 980 MPa or less.

### [Method for manufacturing steel sheet for hot-stamping]

Next, the method for manufacturing a steel sheet for hot-stamping according to the present embodiment is described. Well-known conditions can be applied for conditions not described below.

The steel sheet for hot-stamping according to the present embodiment can be manufactured through a manufacturing method including the following processes.
(I) A casting process for casting a steel ingot or slab having a predetermined chemical composition.
(II) A hot rolling process for heating the steel ingot or the slab to 1,100°C or higher and hot rolling the heated steel ingot or slab so that a finish rolling temperature is 800°C or higher to obtain a hot-rolled steel sheet.
(III) A coiling process for coiling the hot-rolled steel sheet after the hot rolling process in a temperature range of 600°C or lower.
(IV) A cold rolling process for pickling the hot-rolled steel sheet after the coiling process, and then performing cold rolling at a cumulative rolling reduction of 30% to 80% to obtain a cold-rolled steel sheet.
(V) An annealing process for holding the cold-rolled steel sheet in an annealing furnace, in which an oxygen potential in an atmosphere is -1.20 to -0.50 and a temperature of the atmosphere is 650°C to 800°C, for 30 seconds or longer and cooling the steel sheet so that the steel sheet surface temperature becomes 500°C to 400°C after holding.
(VI) A plating process for immersing the cold-rolled steel sheet after the annealing process in a plating bath to form a galvanized layer with a coating amount of 90 g/m² or more per single surface.
(VII) A cooling process for cooling the cold-rolled steel sheet after the plating process to 50°C or lower.

Preferred conditions for each process is described.

### <Casting process>

In the casting process, a steel ingot or slab with the same chemical composition as the steel sheet for hot-stamping according to the present embodiment is cast. Continuous casting slabs or ones manufactured by thin slab casters and the like can be used as slabs. This manufacturing method is also compatible with processes such as continuous casting-direct rolling (CC-DR), in which hot rolling is performed immediately after casting.

### <Hot rolling process>

In the hot rolling process, the cast steel ingot or slab is heated to 1,100°C or higher and the heated steel ingot or slab is hot rolled so that a finish rolling temperature is 800°C or higher to obtain a hot-rolled steel sheet.

Heating temperatures below 1,100°C result in lower finish rolling temperatures. In this case, rolling becomes difficult or causes shape defects in the steel sheet after rolling. Therefore, the heating temperature is set to 1,100°C or higher. However, if the temperature of the steel ingot or slab after casting is 1,100°C or higher, hot rolling may be performed without heating.

In addition, if the finish rolling temperature is below 800°C, the rolling load becomes high, making rolling difficult and causing shape defects in the steel sheet after rolling. Therefore, the finish rolling temperature is set to 800°C or higher. The upper limit of the finish rolling temperature is not necessarily specified, but an excessively high finish rolling temperature requires an excessively high heating temperature to secure that temperature, and therefore, the finish rolling temperature is preferably 1,100°C or lower.

### <Coiling process>

In the hot rolling process, the hot-rolled steel sheet after the hot rolling process is coiled in a temperature range of 600°C or lower. If the coiling temperature exceeds 600°C, the thickness of oxides formed on the steel sheet surface increases excessively and pickling performance deteriorates, which is not preferable. In addition, B concentrates in the iron oxides formed during coiling, and the B content (concentration) in the surface layer portion of the steel sheet decreases, which is not preferable because the B concentration in the surface layer portion of the steel sheet in the subsequent process is not sufficient.

On the other hand, if the coiling temperature is lower than 400°C, the strength of the hot-rolled steel sheet is significantly increased, which easily induces sheet fracture and shape defects during cold rolling. Therefore, when performing cold rolling thereafter, the coiling temperature is desirably set to 400°C or higher. However, if the coiled hot-rolled steel sheet is softened through heating in a box annealing furnace or a continuous annealing facility, coiling may be performed at low temperatures lower than 400°C.

Rough-rolled sheets may be joined to each other during hot rolling and jointed sheets may be subjected to finish rolling continuously. In addition, the rough-rolled sheet may also be coiled once.

### <Cold rolling process>

In the cold rolling process, the hot-rolled steel sheet after the coiling process is pickled, and then cold-rolled at a rolling reduction (cumulative rolling reduction) of 30% to 80% to obtain a cold-rolled steel sheet. The purpose of pickling is to remove scales formed during hot rolling. Pickling is preferably performed using hydrochloric acid with an inhibitor, but may be performed using other acids such as hydrochloric acid without an inhibitor, sulfuric acid, nitric acid, or a composite of these acids as long as the scales on the surface can be removed through pickling.

If the rolling reduction is smaller than 30%, it becomes difficult to keep the shape of the steel sheet flat and the ductility of a final product deteriorates. Therefore, the rolling reduction is set to 30% or larger.

On the other hand, if the rolling reduction exceeds 80%, the rolling load becomes too large and cold rolling becomes difficult. Therefore, the rolling reduction is set to 80% or smaller. The rolling reduction is preferably 40% to 70%. It is unnecessary to particularly specify the number of rolling passes and the rolling reduction per pass.

### <Annealing process>

In the annealing process, the cold-rolled steel sheet is held in an annealing furnace, in which an oxygen potential in an atmosphere is -1.20 to -0.50 and a temperature of the atmosphere is 650°C to 800°C, for 30 seconds or longer, and cooled so that the steel sheet surface temperature becomes 500°C to 400°C after holding.

The annealing process is preferably performed by passing the sheet through a continuous hot-dip galvanizing line to continuously perform with a subsequent plating process.

During annealing, the annealing temperature (atmospheric temperature) is set to 650°C to 800°C to soften the steel sheet and to concentrate B on the steel sheet surface. If the annealing temperature is in the range of 650°C to 800°C, dislocations introduced during cold rolling are released by recovery, recrystallization, or phase transformation, and therefore, annealing is desirably performed in this temperature range. When the annealing temperature (atmospheric temperature) exceeds 750°C, austenite is formed during annealing and tends to transform to bainite or martensite during subsequent cooling, resulting in hardening. In addition, since austenite diffuses B more slowly than ferrite, it takes a longer time for B to concentrate in the surface layer, and B concentration in the galvanized layer tends to decrease in the subsequent plating process. Therefore, the annealing temperature (atmospheric temperature) is preferably set to 750°C or lower. However, if the annealing temperature (atmospheric temperature) is higher than 750°C and 800°C or lower, the steel sheet for hot-stamping tends to be harder and it is necessary for the heat treatment time (annealing time) to be longer to secure rust resistance compared to when the annealing temperature (atmospheric temperature) is set to 650°C to 750°C, but both cases are limited. Therefore, even when the annealing temperature (atmospheric temperature) is set to be higher than 750°C and 800°C or lower, the steel sheet for hot-stamping according to the present embodiment can be obtained.

On the other hand, if the annealing temperature is lower than 650°C, it becomes difficult to recrystallize the cold-rolled steel sheet and softening, which is the purpose of annealing, cannot be achieved. Therefore, the annealing temperature is set to 650°C or higher.

The oxygen potential in an atmosphere during annealing is set to -0.50 to -1.20. If the oxygen potential exceeds -0.50, not only does the effect of B concentration in the surface layer become saturated, but also the oxygen potential in the furnace becomes too high, resulting in degradation of hearth rolls or refractories in the furnace. If the oxygen potential is less than -1.20, B cannot be concentrated on the steel sheet surface during annealing, and as a result, B cannot be sufficiently contained in the galvanized layer.

The oxygen potential in the furnace is defined as log (PH₂O/PH₂), where PH₂O is water vapor partial pressure in an atmosphere and PH₂ is hydrogen partial pressure in an atmosphere.

In the case of the above-described oxygen potential, for example, the dew point is 0°C to +20°C in an atmosphere containing about 10% hydrogen.

If the holding time at 650°C to 800°C is less than 30 seconds, B concentration on the steel sheet surface is insufficient. On the other hand, if the retention time exceeds 6,000 seconds, not only does the effect become saturated, but also the economic rationality becomes poor, which is not preferable.

B is concentrated on the surface of the steel sheet through this annealing process. The reason for concentrating B in the annealing process is that even if B is concentration on the surface of the steel sheet during the hot rolling process, for example, the B-concentrated layer is removed by pickling or the like before subsequent cold rolling, and B cannot be diffused into the plating layer in the plating process. In addition, this is because if B is concentrated in the iron oxides formed during coiling, the B concentration in the surface layer of the steel sheet decreases, and therefore the B concentration in the surface layer of the steel sheet in the subsequent process is not sufficient.

After holding, the steel sheet is cooled to a surface temperature of 500°C to 400°C for the subsequent plating process.

In general, the temperature of the plating bath is about 450°C. Therefore, immersing the steel sheet in the plating bath at lower than 400°C causes problems such as plating is solidified, resulting in non-plating. On the other hand, when the steel sheet is immersed in the plating bath at temperatures exceeding 500°C, zinc oxides are formed during plating, resulting in non-plating. For this reason, the steel sheet to be used in the plating process is cooled to 500°C to 400°C. During cooling, the average cooling rate is preferably lower than 2.0 °C/second because reducing the temperature difference within the sheet makes the immersion temperature in the plating bath constant, which contributes to the suppression of non-plating and uneven alloying.

### <Plating process>

In the plating process, the cold-rolled steel sheet after the annealing process is immersed in a plating bath to form a galvanized layer with a coating amount of 90 g/m² or more. The plating bath may be adjusted according to the chemical composition of the plating layer to be obtained, and the temperature of the plating bath may be within a well-known range. The coating amount of the galvanized layer can be adjusted through wiping after pulling it out of the plating bath.

### <Alloying process>

In the steel sheet for hot-stamping according to the present embodiment, since it is desirable to reduce the Fe content in the plating layer to form a Γ layer after hot stamping heat treatment, the alloying heat treatment is not performed or the cold-rolled steel sheet with the galvanized layer is heated to 460°C to 490°C for limited alloying. Here, limited alloying means that alloying heat treatment is performed so that the Fe content is less than 9.0% in the chemical composition of the galvanized layer. Heat treatment at temperatures exceeding 490°C is not preferable because the Fe content in the steel sheet for hot-stamping becomes 9.0% or higher. Alloying heat treatment at lower than 460°C requires a longer time for alloying, resulting in lower thermal and time efficiency. However, for the purpose of manufacturing a hot-dip galvanized steel sheet, heat treatment may be performed in a temperature range where an alloying reaction does not proceed.

### <Cooling process>

The cold-rolled steel sheet after the plating process or the alloying process is cooled to 50°C or lower, for example, to room temperature. The cooling conditions are not limited.

### [Hot-stamped formed body]

Next, the hot-stamped formed body according to the present embodiment will be described.

The hot-stamped formed body according to the present embodiment includes a base steel sheet and a plating layer which contains Zn and Fe and is formed on the surface of the base steel sheet.

The base steel sheet referred to herein does not necessarily have to be flat, but includes those formed into various shapes through press working or the like.

The hot-stamped formed body according to the present embodiment is obtained through hot-stamping the steel sheet for hot-stamping according to the present embodiment as described below.

### <Plating layer>

The plating layer of the hot-stamped formed body according to the present embodiment is a plating layer which contains Zn and Fe and is formed by alloying Zn of the galvanized layer on the surface of the steel sheet for hot-stamping with Fe of the steel sheet through hot stamping.

In the plating layer containing Zn and Fe, multiple layers may be formed depending on the ratio of Zn to Fe. The plating layer of the hot-stamped formed body according to the present embodiment has a coating amount of 40 g/m² or more of a Γ layer including a Γ phase having 9 to 30 mass% of a Fe content.

This Γ layer has, in mass%, a chemical composition including Al: 0% to 1.00%, Fe: 9.0 to 30.0%, Si: 0% to 1.0%, Mg: 0% to 0.5%, Mn: 0% to 0.5%, Pb: 0% to 0.5%, Sb: 0% to 0.5%, Ni: 0 to 5.0%, Co: 0% to 5.0%, Mn: 0% to 5.0%, P: 0% to 0.5%, B 0.0005% to 0.0500%, and the remainder of Zn and impurities.

In addition, the plating layer of the hot-stamped formed body according to the present embodiment may have one or more oxides of Al, Si, Mn, and Zn in the topmost layer, a Γ layer on base steel sheet side next to the oxides, and a zinc solid solution of Fe on base steel sheet side next to the Γ layer.

If the coating amount of the Γ layer having a Fe content of 9 to 30 mass% is less than 40 g/m², sufficient rust resistance cannot be secured. For this reason, the coating amount of the Γ layer is 40 g/m² or more. The coating amount of the Γ layer is preferably 45 g/m² or more. The upper limit of the coating amount is not limited, but the coating amount of the Γ layer may be less than 100 g/m², 80 g/m² or less, or 60 g/m² or less.

In plating layers containing Zn and Fe, sacrificial corrosion protection properties are lost if the Fe content in any layer exceeds 30 mass%. On the other hand, if the Fe content is less than 9 mass%, the Fecontent in the plating layer is too low and the plating is soft and likely to be scratched, which is not preferable.

As a layer other than the Γ layer, a solid solution layer mainly composed of Fe may also be formed at 5 g/m² or more, but no particular restriction is placed on the presence of this layer.

Even if the surface oxide film is removed with an alkaline or acid solution after quenching treatment through hot stamping to improve adhesion of coating film and chemical conversion treatability, the hot-stamped formed body is within the range of the hot-stamped formed body according to the present embodiment as long as the Zn-Fe alloy layer (Γ layer) which is mainly composed of Zn and has 9 to 30 mass% of Fe is present at 40 g/m² or more.

Elements such as Ni, Co, Mn, and P may be contained in a plating layer to further improve corrosion resistance and chemical conversion treatability, but even if these elements are contained, if Zn is the main component (for example, 60 mass% or more) and the Fe content is 9 to 30 mass%, the layer is a Γ layer.

The coating amount of the Γ-layer is obtained through the following method.

The measurement of the Γ layer which is mainly composed of Zn and contains 9 to 30 mass% of Fe is carried out through the following method. That is, the hot-stamped formed body is electrolyzed up to the Γ layer at a point where the potential changes significantly to -800 mVvs. SCE or less through constant current electrolysis using a saturated calomel electrode as a reference electrode at 4 mA/cm² in an aqueous solution of 150 g/L NH₄Cl, and the electrolytic solution is measured through ICP to specify the coating amount and chemical composition thereof.

For the measurement of the Zn-Fe alloy layer with more than 30 mass% of Fe, after electrolysis up to the above-described Γ layer, the electrolytic solution is replaced with a new solution and continuously electrolyzed up to the iron potential (about -560 mVvs. SCE), and the electrolytic solution is measured through ICP in the same manner.

In addition, in the hot-stamped formed body according to the present embodiment, when the maximum value of the B content in the plating layer in mass% is Bp and the B content in mass% at a position at 1/4 depth of the base steel sheet is Bq, Bp is 1.2 times or more Bq (Bp/Bq ≥ 1.2).

By setting Bp to 1.2 times or more Bq, the rust resistance of the hot-stamped formed body can be improved. Although the detailed mechanism is unknown, it is thought that this is because the presence of B in the plating layer suppresses the alloying reaction between Fe and Zn during hot stamping, enabling the Γ layer to be secured at 40 g/m² or more, and suppression of the non-uniform reaction between Fe and Zn in the plating layer suppresses the formation of unevenness in the plating layer. This effect is significant when the Bp/Bq is 1.2 or more, and therefore, the Bp/Bq is set to 1.2 or more. The Bp/Bq is desirably 1.3 or more, and more desirably 1.4 or more.

The Bp/Bq is obtained through the following method.

When measuring Bp, the maximum value Bp of B in the plating layer can be measured by cutting out a 50 mm × 50 mm test piece from the formed body, and performing elemental analysis from the surface layer through glow discharge emission analysis (GDS). Whether the subject is a plating layer or a base material may be identified by referring to the Zn and Fe contents. The area where the Fe content in Zn is 9 to 30 mass% is defined as a Γ layer, and the maximum value of the B content in the plating layer in mass% is defined as Bp.

For the B content in mass% at a position at 1/4 depth of the base steel sheet, a 50 mm wide × 50 mm long test piece is cut out from the hot-stamped formed body, polishing is performed to the 1/4 depth position of the base steel sheet, and then the B content is measured in mass% through GDS.

In the measurement, an average value of B contents within a range from a position of 10 µm to a position of 20 µm in the sheet thickness direction from the polished surface of the formed body is set to Bq. The B content is measured at these positions because the polished test specimen may have adherents on the surface and may lack quantification. However, if adherents can be removed, the average value of the B contents at positions of 0 to 10 µm from the polished surface can also be set to Bq. The average content in the range of 10 µm (10 to 20 µm, or 0 to 10 µm) in the sheet thickness direction is set to Bq to remove the influence of slight segregation formed during casting. On the other hand, while expanding the measurement range in the sheet thickness direction is advantageous in terms of accuracy, expanding the measurement range in the sheet thickness direction leads to longer measurement time. The measurement of elemental distribution in the sheet thickness direction through GDS should be limited to 100 µm because the larger the measurement area in the depth direction, the longer time is required.

### <Base steel sheet>

### <<Chemical composition>>

The hot-stamped formed body according to the present embodiment is obtained by performing hot stamping on the steel sheet for hot-stamping according to the present embodiment as described above. Since the chemical composition of the base steel sheet is not substantially changed by hot stamping, the chemical composition of the base steel sheet of the hot-stamped formed body according to the present embodiment is the same as that of the base steel sheet of the steel sheet for hot-stamping according to the present embodiment in terms of range and limiting reasons.

### <<Microstructure>>

It is necessary for the microstructure of the hot-stamped formed body according to the present embodiment to be controlled according to the strength of a desired formed body. If the tensile strength of the hot-stamped formed body is set to 800 MPa or more, the microstructure may contain, in volume fraction, martensite: 5% to 100% and ferrite: 0% to 95% at a position at 1/4 depth which is in a range of 1/8 to 3/8 of a sheet thickness in a sheet thickness direction from the surface of the base steel sheet, the remaining structure including bainite and/or pearlite. If the volume fraction of martensite is less than 5%, sufficient strength cannot be obtained.

If the tensile strength of the hot-stamped formed body is set to be in a range of 1,000 MPa or more (for example, 1,200 MPa or less), the martensite volume fraction is desirably set to 10% or more.

If the tensile strength of the hot-stamped formed body is set to be in a range of more than 1,200 MPa, the martensite volume fraction is desirably set to 80% or more.

The remainder other than martensite and ferrite is one or more (one or two) of bainite and pearlite. The remainder may not be contained.

The microstructure and chemical composition of the base steel sheet of the hot-stamped formed body according to the present embodiment can be measured in the same manner as the microstructure and chemical composition of the base steel sheet of the steel sheet for hot-stamping according to the present embodiment.

As described above, since the hot-stamped formed body according to the present embodiment is obtained by hot stamping the steel sheet for hot-stamping in which B in the surface layer portion of the base steel sheet is concentrated on the surface and B concentrated on the surface is diffused in the plating layer, in the surface layer portion of the base steel sheet of the hot-stamped formed body, there may be an area in which the b content (concentration) has decreased.

Specifically, the B content at a position of 10 µm from the surface of the base steel sheet may be 80% or less of the B content at a position at 1/4 depth of the sheet thickness of the base steel sheet.

### [Properties]

The strength of the hot-stamped formed body is not particularly specified, and excellent rust resistance can be secured.

However, since the major object of using the hot-stamped formed body is to secure a high-strength formed body, the tensile strength of the hot-stamped formed body is desirably set to 800 MPa or more. Depending on the application, the tensile strength of the hot-stamped formed body may be 1,000 MPa or more or 1,200 MPa or more.

### [Method for manufacturing hot-stamped formed body]

The hot-stamped formed body according to the present embodiment is obtained by performing hot stamping on the steel sheet for hot-stamping according to the present embodiment.

Although hot stamping conditions may be within the well-known range, the steel sheet for hot-stamping according to the present embodiment is less affected by heating conditions during hot stamping, and it is possible to apply following conditions, for example: heating at heating temperatures of 850°C to 920°C and heating time of 180 to 600 seconds, and then cooling to the martensitic transformation start temperature or less at an average cooling rate of 30°C/second or higher while forming.

The hot-stamped formed body may be cooled in a mold so that a strength is uniform in a formed body, or a portion of it may be air-cooled or slowly cooled in a mold installed along with a heater or the like at the same time as the cooling in a mold to create different strengths for different portions.

### [Examples]

Next, examples of the present invention will be described. However, the conditions in the examples are merely condition examples employed for confirming the feasibility and effect of the present invention, and the present invention is not limited to these condition examples. The present invention can adopt various conditions as long as they are within the scope of the appended claims.

Slabs with the chemical compositions shown in Table 1 (units being mass%, the remainder being Fe and impurities) were cast.

Hot rolling was performed on these slabs under the conditions in Tables 2-1 and 2-2 to manufacture hot-rolled steel sheets with a sheet thickness of 4.0 mm. The hot-rolled steel sheets were coiled and uncoiled, pickling was then performed, and cold rolling was performed until the sheet thickness became 2.0 mm to manufacture cold-rolled steel sheets.

Thereafter, these cold-rolled steel sheets were then passed through a continuous hot-dip galvanizing line, annealed and plated to obtain steel sheets for hot-stamping. Specifically, the steel sheets were held in atmospheres shown in Tables 2-1 and 2-2 for 120 seconds, cooled at an average cooling rate of 1.6°C/second until the surface temperature reached 500°C to 400°C, and then immersed in a plating bath with a bath temperature of 460°C to form plating layers on the surfaces. Thereafter, the steel sheets were cooled to 50°C or lower. In some steel sheets, limited alloying was performed at the temperatures listed in the tables.

Chemical compositions of the plating layers and microstructures of the base steel sheets of the obtained steel sheets for hot-stamping were measured through the above-described methods. In addition, the Bps/Bqs were also measured.

Results are shown in Tables 2-3 and 2-4. The remainder of the chemical composition of the plating layer except for B, Fe, and Al was Zn and impurities including Mn, Si, Cr, and Ti that were mixed in from the steel sheets.

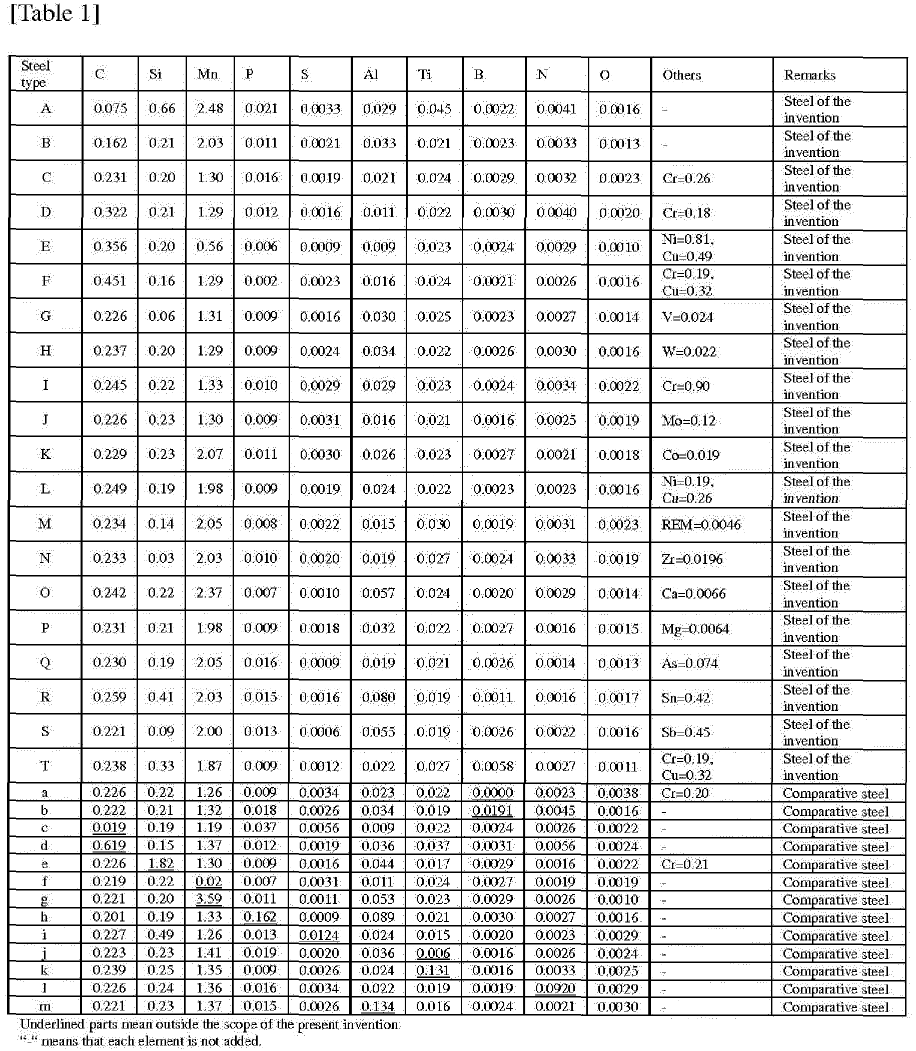

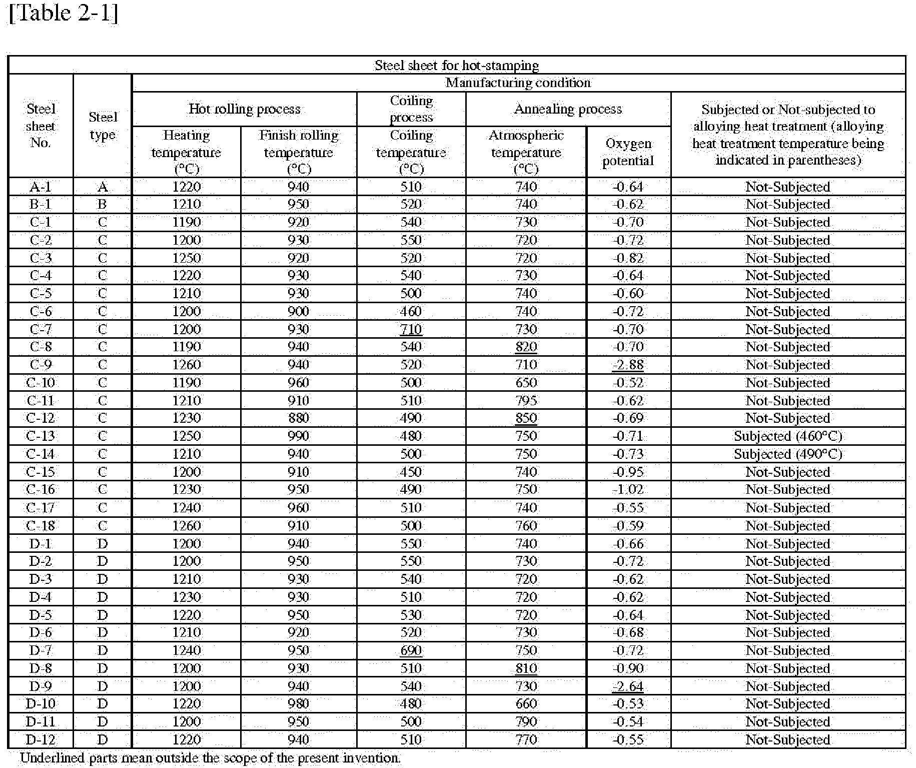

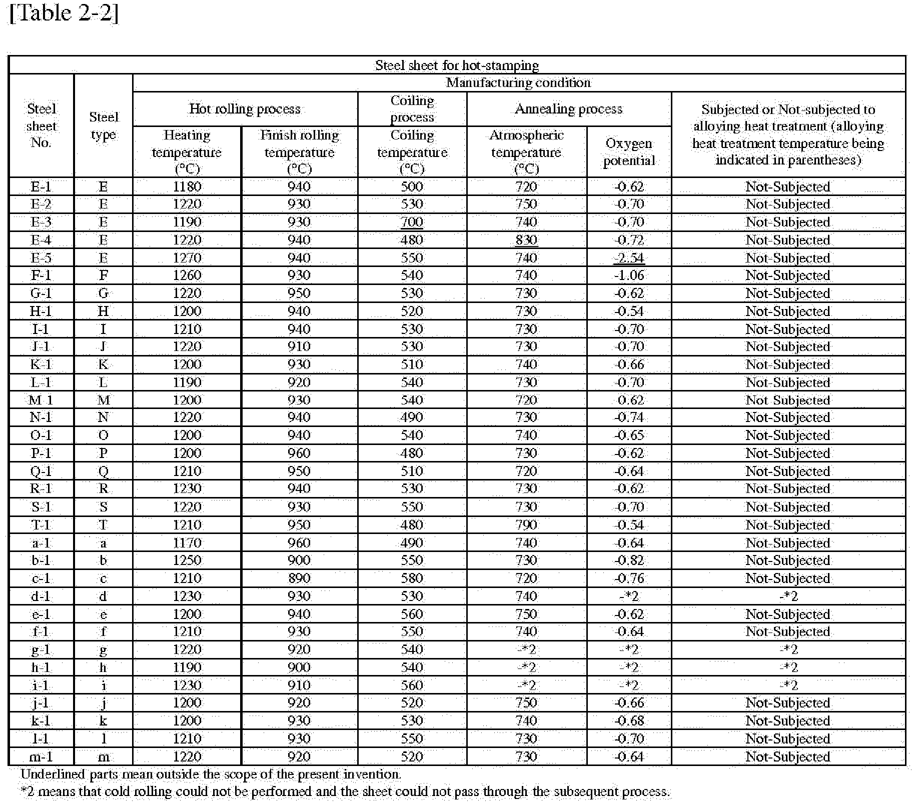

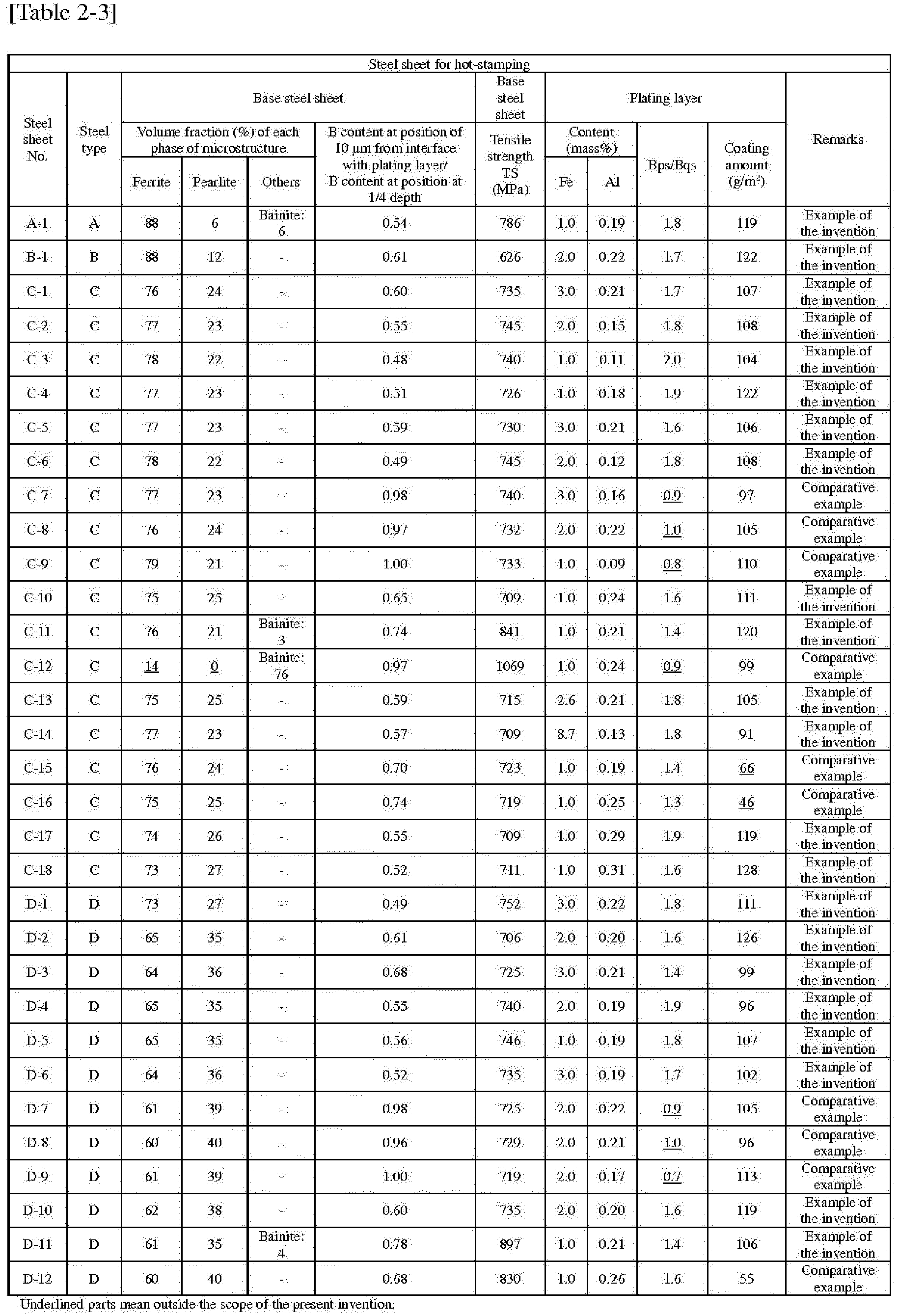

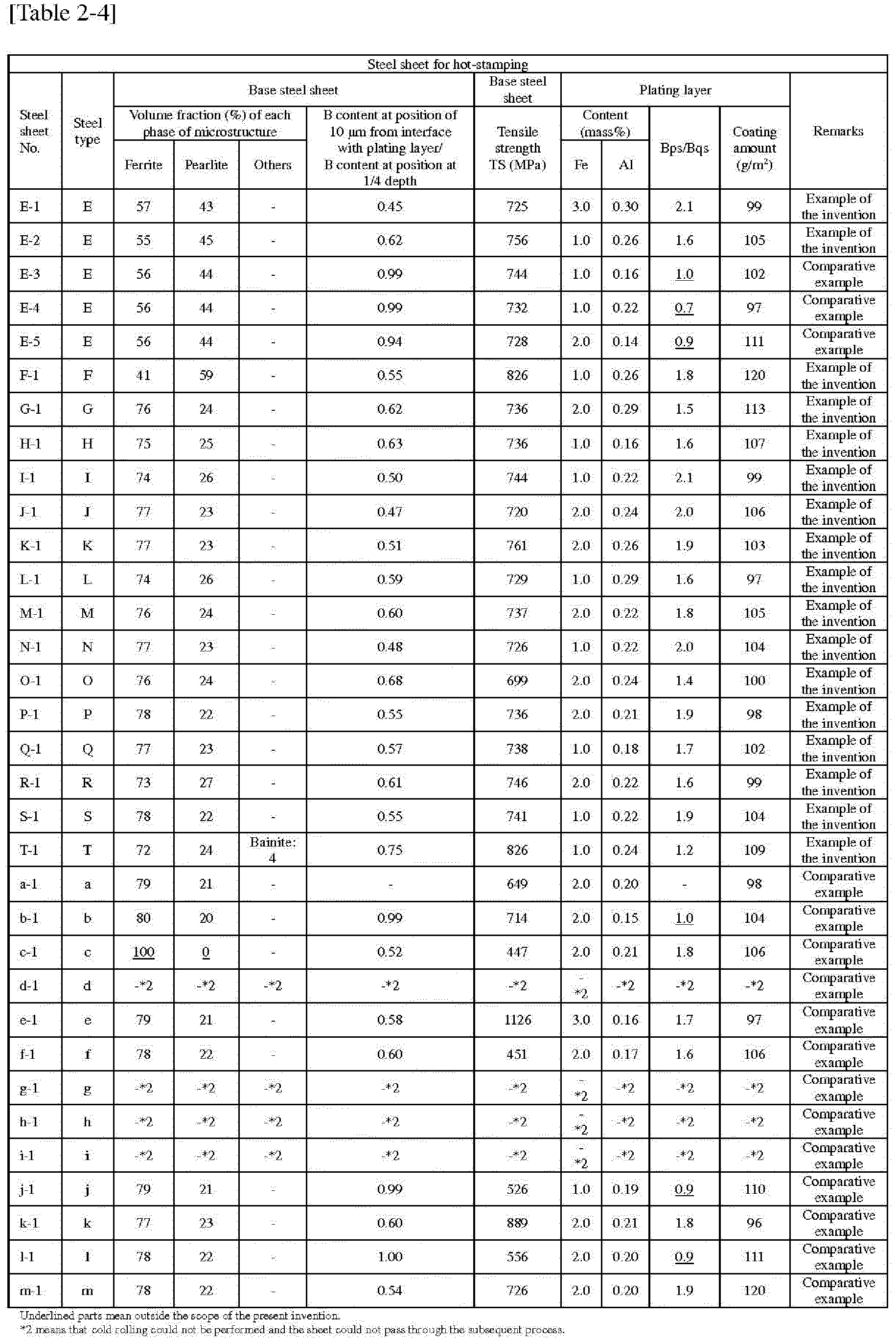

Hot stamping was performed on these steel sheets for hot-stamping (A1 to m1).

For hot stamping, as shown in Tables 3-1 and 3-2, two samples were prepared for each example and inserted into an atmospheric furnace with a furnace temperature of 860°C to 950°C. After performing two types of heating, one for 6 minutes and the other for 9 minutes, each was taken out from the furnace and quenched (cooled to the martensitic transformation start temperature or less at an average cooling rate of 30°C/second or higher) using a mold. Accordingly, a hot-stamped formed body was obtained.

The coating amount of the Γ layer and the microstructure of the base steel sheet of each of these hot-stamped formed bodies were measured through the above-described method. In addition, the maximum value of the B content of a plating layer was measured through the above-described method and a Bp/Bq is obtained. Results are shown in Tables 3-1 and 3-4. However, the tables show results of test pieces heated for 9 minutes as an example, except for the coating amount of the Γ-layer.

In addition, the tensile strength and rust resistance of the hot-stamped formed bodies in the case of 9-minute heating, which is a stricter evaluation, were evaluated as follows. Results are shown in Tables 3-3 and 3-4.

### [Tensile strength]

No. 5 test pieces of JIS Z 2241:2011 were cut out from the obtained hot-stamped formed bodies and tensile tests were conducted in accordance with JIS Z 2241:2011. The crosshead speed in the tensile test was performed under the conditions that the strain rate was constant at 0.005s⁻¹.

It was determined that a tensile strength of 800 MPa or more would satisfy the assumed target value.

### [Rust resistance]

### (Corrosion resistance - blister in coating film)

A 70 mm × 150 mm sample was taken from each of the manufactured hot-stamped formed bodies. After degreasing its surface, the surface was subjected to chemical conversion treatment with Palbond LA35 (manufactured by Nihon Parkerizing Co., Ltd.) and coated with 15 µm of cationic electrodeposition coating (Powernix 110: manufactured by Nippon Paint Co., Ltd.), and then cross-cutting was carried out.

The width of a blister in the coating film (one side) from the cross-cut area was measured for this test piece after 300 cycles under the corrosion test conditions specified in the standard SAE-J2334 of the American Automobile Manufacturers Association.

A sample with a width of a blister of 10 mm or less was determined to have excellent corrosion resistance.

### [Rust resistance]

### (Corrosion resistance - red rust resistance)

A 65 mm × 120 mm sample was collected from each of the manufactured hot-stamped formed bodies. After degreasing its surface, the surface was subjected to chemical conversion treatment with Palbond LA35 (manufactured by Nihon Parkerizing Co., Ltd.), and cationic electrodeposition coating (Powernix 110: manufactured by Nippon Paint Co., Ltd.) was applied thereto to form a 15-µm thick coating film. Then, the periphery and backside of the sample were sealed with resin tape, followed by performing the combined-cycle corrosion test using low-concentration salt water according to JIS G 0594:2019.

This combined-cycle corrosion test consisted of 1) Salt water spray (1 hour), 2) Drying (4 hours), and 3) Moistening (3 hours), for a total of 8 hours per cycle, and the state of red rust formation was examined after 50 cycles.
1) Salt water spray (1 hour)
   Sodium chloride concentration: 1 g/L, pH: 6 to 7, temperature: 35°C, spray volume: 1.5 mL/h per 80 cm²
2) Drying (4 hours)
   Temperature: 50°C, humidity: 30% or less
3) Moistening (3 hours)
   Temperature: 40°C, humidity: 90%
   Test piece placement angle: 20° from vertical

The corrosion resistance was then evaluated according to the following criteria.
A: There is no red rust formation.
B: The area proportion occupied by red rust (including minute red rust) is less than 5% in total.
C: The area proportion occupied by red rust is 5% to 20% in total.
D: The area proportion occupied by red rust exceeds 20% in total.

The score B is determined to be within the acceptable range, and the score A is determined to be excellent in red rust resistance.

### [Rust resistance]

### (Adhesion of coating film)

A 70 mm × 150 mm sample was taken from each of the manufactured hot-stamped formed bodies. After degreasing its surface, the surface was subjected to chemical conversion treatment with Palbond LA35 (manufactured by Nihon Parkerizing Co., Ltd.), and cationic electrodeposition coating (Powernix 110: manufactured by Nippon Paint Co., Ltd.) was applied thereto to form a 15-µm thick coating film.

This test piece was subjected to a warm salt water immersion test to evaluate the adhesion of coating film. For the warm salt water immersion test, the sample was subjected to chemical conversion treatment and electrodeposition coating, and then 45-mm long cross-cut scratches were made using a cutter. The sample was then immersed in a 5% NaCl solution at 60°C for 240 hours, and after immersion, washed with water, and dried.

After adhesive tape was pasted on the cut scratches of the dried sample, the tape was peeled off, and the maximum full width of peeling, which was the maximum value of the width of the peeled coating film in the direction perpendicular to the length direction of the cut scratches, was measured.

A sample having a maximum full width of peeling of 5 mm or less was determined to have favorable resistance to warm salt water adhesion (adhesion of coating film).

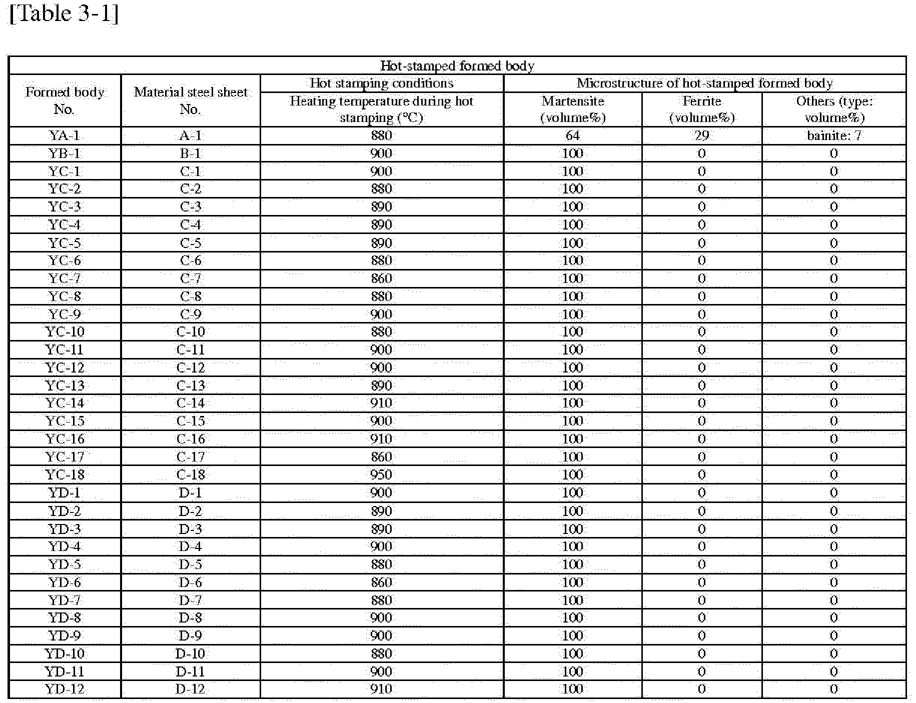

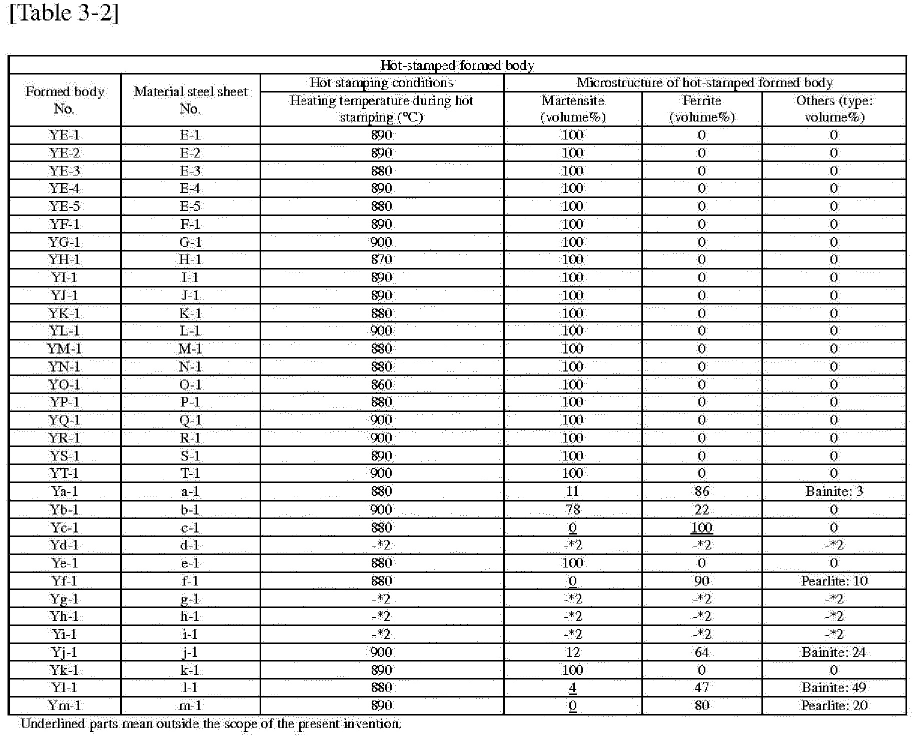

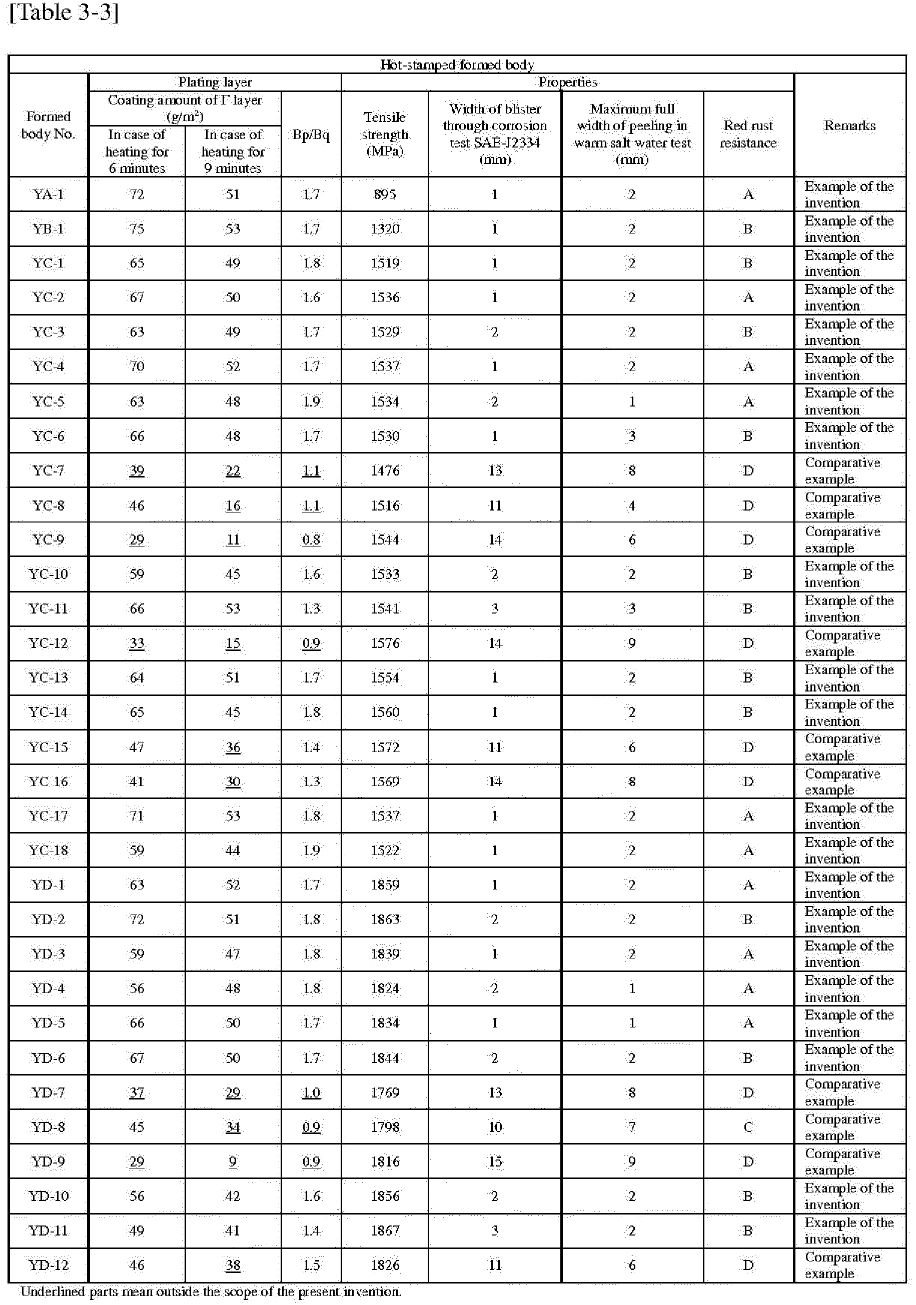

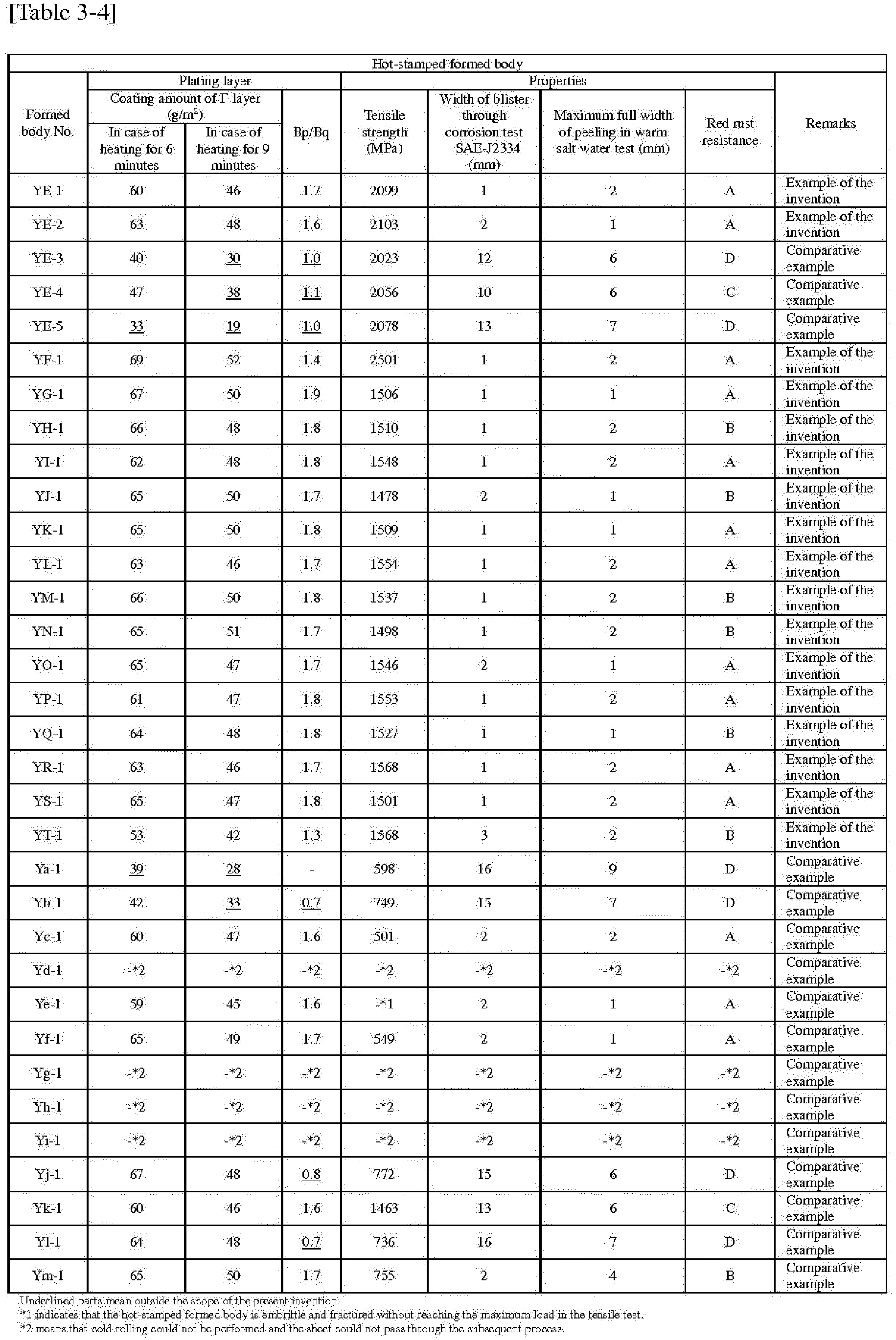

As can be seen from Tables 1 to 3-4, in Present Examples of the invention A-1 to C-6, C-10, C-11, C-13, C-14, C-17 to D-6, D-10, D-11, E-1, E-2, F-1 to T-1, the steel sheets had predetermined chemical compositions with a coating amount of 90 g/m² or more and Bps of 1.2 times or more Bqs, and were hot-stamped to obtain hot-stamped formed bodies YA-1 to YC-6, YC-10, YC-11, YC-13, YC-14, YC-17 to YD-6, YD-10, YD-11, YE-1, YE-2, and YF-1 to YT-1 having high strength and excellent rust resistance.

On the other hand, in Comparative Examples C-7 to C-9, C-12, C-15, C-16, D7 to D-9, D-12, E3 to E-5, a-1 to c-1, e-1 to f-1, and j-1 to m-1, the chemical composition was outside the predetermined range or Bps was less than 1.2 times Bqs, and the steel sheets were hot-stamped to obtain YC-7 to YC-9, YC-12, YC-15, C-16, YD7 to YD-9, YD-12, YE3 to YE-5, Ya-1 to Yc-1, Ye-1 to Yf-1, and Yj-1 to Ym-1 having not sufficient tensile strength and rust resistance.

In addition, in d-1 and g-1 to i-1, the hot-rolled steel sheets fractured during cold rolling due to too high strength or too high P and S contents, and therefore could not pass through the subsequent process.

### [Industrial Applicability]

According to the present invention, it is possible to provide a hot-stamped formed body which can be manufactured under a wide range of heating conditions and has excellent rust resistance (corrosion resistance and adhesion of coating film), a steel sheet for hot-stamping suitable as a material for the hot-stamped formed body, and a method for manufacturing a steel sheet for hot-stamping.

## Claims

1. A steel sheet for hot-stamping comprising:
a base steel sheet; and
a galvanized layer formed on a surface of the base steel sheet, wherein the galvanized layer has, in mass %, a chemical composition comprising
B: 0.0005% to 0.0500%,
Al: 0% to 1.00%,
Fe: 0.1% to 20.0%,
Si: 0% to 1.0%,
Mg: 0 to 0.5%,
Mn: 0 to 0.5%,
Pb: 0 to 0.5%,
Sb: 0 to 0.5%,
and remainder: Zn and impurities,
wherein the base steel sheet has, in mass%, a chemical composition comprising
C: 0.030% to 0.600%,
Si: 0.01% to 1.50%,
Mn: 0.10% to 2.50%,
Al: 0.001% to 0.100%,
Ti: 0.010% to 0.100%,
B: 0.0005% to 0.0100%,
P: 0.100% or less,
S: 0.0100% or less,
N: 0.0150% or less,
O: 0.0100% or less,
Nb: 0% to 0.050%,
V: 0% to 0.500%,
W: 0% to 0.500%,
Cr: 0% to 1.00%,
Mo: 0% to 0.50%,
Co: 0% to 1.000%,
Ni: 0% to 1.00%,
Cu: 0% to 1.00%,
REM: 0% to 0.0100%,
Zr: 0% to 0.0500%,
Ca: 0% to 0.0100%,
Mg: 0% to 0.0100%,
As: 0% to 0.100%,
Sn: 0% to 0.50%,
Sb: 0% to 0.50%, and
a remainder: Fe and impurities,
wherein a microstructure at a position at 1/4 depth which is in a range of 1/8 to 3/8 of a sheet thickness in a sheet thickness direction from the surface of the base steel sheet contains, in volume fraction,
ferrite: 20% to 95% and
pearlite: 5% to 80%,
the remaining structure comprising bainite,
wherein the volume fractions of ferrite, bainite and pearlite are measured according to the method described in the description,
wherein the galvanized layer has a coating amount of 90 g/m² or more, and
wherein, when a maximum value of a B content in the galvanized layer is Bps and a B content at the position at 1/4 depth of the base steel sheet is Bqs, Bps is 1.2 times or more Bqs, wherein Bqs and Bps are measured as set out in the description.

2. The steel sheet for hot-stamping according to claim 1,
wherein a chemical composition of the galvanized layer includes, in terms of mass,
Fe: less than 9.0%.

3. The steel sheet for hot-stamping according to claim 1 or 2,
wherein the chemical composition of the base steel sheet contains, in mass%, one or more selected from the group consisting of
Nb: 0.005% to 0.050%,
V: 0.005% to 0.500%,
W: 0.005% to 0.500%,
Cr: 0.01% to 1.00%,
Mo: 0.01% to 0.50%,
Co: 0.01% to 1.000%,
Ni: 0.01% to 1.00%,
Cu: 0.01% to 1.00%,
REM: 0.0003% to 0.0100%,
Zr: 0.0003% to 0.0500%,
Ca: 0.0003% to 0.0100%,
Mg: 0.0003% to 0.0100%,
As: 0.001% to 0.100%,
Sn: 0.01% to 0.50%, and
Sb: 0.01% to 0.50%.

4. A method for manufacturing a steel sheet for hot-stamping according to one of claims 1 to 3, comprising:
casting a steel ingot or a slab having chemical components including, in mass%, C: 0.030% to 0.600%, Si: 0.01% to 1.50%, Mn: 0.10% to 2.50%, Al: 0.001% to 0.100%, Ti: 0.010% to 0.100%, B: 0.0005% to 0.0100%, P: 0.100% or less, S: 0.0100% or less, N: 0.0150% or less, O: 0.0100% or less, Nb: 0% to 0.050%, V: 0% to 0.500%, W: 0% to 0.500%, Cr: 0% to 1.00%, Mo: 0% to 0.50%, Co: 0% to 1.000%, Ni: 0% to 1.00%, Cu: 0% to 1.00%, REM: 0% to 0.0100%, Zr: 0% to 0.0500%, Ca: 0% to 0.0100%, Mg: 0% to 0.0100%, As: 0% to 0.100%, Sn: 0% to 0.50%, Sb: 0% to 0.50%, and a remainder: Fe and impurities;
heating the steel ingot or the slab to 1,100°C or higher and hot rolling the heated steel ingot or slab so that a finish rolling temperature is 800°C or higher to obtain a hot-rolled steel sheet;
coiling the hot-rolled steel sheet after the hot rolling in a temperature range of 600°C or lower;
pickling the hot-rolled steel sheet after the coiling, and then performing cold rolling at a cumulative rolling reduction of 30% to 80% to obtain a cold-rolled steel sheet;
performing annealing by holding the cold-rolled steel sheet in an annealing furnace, in which an oxygen potential in an atmosphere is -1.20 to -0.50 and a temperature of the atmosphere is 650°C to 800°C, for 30 seconds or longer and cooling the steel sheet so that the steel sheet surface temperature is 500°C to 400°C;
performing plating by immersing the cold-rolled steel sheet after the annealing in a plating bath to form a galvanized layer with a coating amount of 90 g/m² or more; and
cooling the cold-rolled steel sheet after the plating to 50°C or lower.

5. A hot-stamped formed body comprising:
a base steel sheet; and
a plating layer containing Zn and Fe and formed on a surface of the base steel sheet,
wherein the base steel sheet has, in mass%, a chemical composition comprising
C: 0.030% to 0.600%,
Si: 0.01% to 1.50%,
Mn: 0.10% to 2.50%,
Al: 0.001% to 0.100%,
Ti: 0.010% to 0.100%,
B: 0.0005% to 0.0100%,
P: 0.100% or less,
S: 0.0100% or less,
N: 0.0150% or less,
O: 0.0100% or less,
Nb: 0% to 0.050%,
V: 0% to 0.500%,
W: 0% to 0.500%,
Cr: 0% to 1.00%,
Mo: 0% to 0.50%,
Co: 0% to 1.000%,
Ni: 0% to 1.00%,
Cu: 0% to 1.00%,
REM: 0% to 0.0100%,
Zr: 0% to 0.0500%,
Ca: 0% to 0.0100%,
Mg: 0% to 0.0100%,
As: 0% to 0.100%,
Sn: 0% to 0.50%,
Sb: 0% to 0.50%, and
a remainder: Fe and impurities,
wherein a microstructure at a position at 1/4 depth which is in a range of 1/8 to 3/8 of a sheet thickness in a sheet thickness direction from the surface of the base steel sheet contains, in volume fraction,
martensite: 5% to 100% and
ferrite: 0% to 95%,
the remaining structure comprising one or two of bainite and pearlite,
wherein the volume fractions of martensite, ferrite, bainite and pearlite are measured according to the method described in the description,
wherein a Γ layer in the plating layer has, in mass%, a chemical composition comprising
Al: 0% to 1.00%,
Fe: 9.0 to 30.0%,
Si: 0% to 1.0%,
Mg: 0% to 0.5%,
Mn: 0% to 0.5%,
Pb: 0% to 0.5%,
Sb: 0% to 0.5%,
Ni: 0 to 5.0%,
Co: 0% to 5.0%,
Mn: 0% to 5.0%,
P: 0% to 0.5%,
B 0.0005% to 0.0500%, and
a remainder: Zn and impurities,
wherein the Γ layer has a coating amount of 40 g/m² or more, and
wherein, when a maximum value of a B content in mass% in the plating layer is Bp and a B content at a position at 1/4 depth of the base steel sheet in mass% is Bq, Bp is 1.2 times or more Bq, wherein the Γ layer, Bq and Bp are measured as set out in the description.

6. The hot-stamped formed body according to claim 5,
wherein the chemical composition of the base steel sheet contains, in mass%, one or more selected from the group consisting of
Nb: 0.005% to 0.050%,
V: 0.005% to 0.500%,
W: 0.005% to 0.500%,
Cr: 0.01% to 1.00%,
Mo: 0.01% to 0.50%,
Co: 0.01% to 1.000%,
Ni: 0.01% to 1.00%,
Cu: 0.01% to 1.00%,
REM: 0.0003% to 0.0100%,
Zr: 0.0003% to 0.0500%,
Ca: 0.0003% to 0.0100%,
Mg: 0.0003% to 0.0100%,
As: 0.001% to 0.100%,
Sn: 0.01% to 0.50%, and
Sb: 0.01% to 0.50%.

## Patentansprüche

1. Stahlblech zum Warmprägen, umfassend:
ein Basisstahlblech; und
eine verzinkte Schicht, die auf einer Oberfläche des Basisstahlblechs ausgebildet ist, wobei die verzinkte Schicht, in Masse-%, eine chemische Zusammensetzung aufweist, die umfasst
B: 0,0005% bis 0,0500%,
Al: 0% bis 1,00%,
Fe: 0,1% bis 20,0%,
Si: 0% bis 1,0%,
Mg: 0 bis 0,5%,
Mn: 0 bis 0,5%,
Pb: 0 bis 0,5%,
Sb: 0 bis 0,5%,
und Rest: Zn und Verunreinigungen,
wobei das Basisstahlblech, in Masse-%, eine chemische Zusammensetzung aufweist, die umfasst
C: 0,030% bis 0,600%,
Si: 0,01% bis 1,50%,
Mn: 0,10% bis 2,50%,
Al: 0,001% bis 0,100%,
Ti: 0,010% bis 0,100%,
B: 0,0005% bis 0,0100%,
P: 0,100% oder weniger,
S: 0,0100% oder weniger,
N: 0,0150% oder weniger,
O: 0,0100% oder weniger,
Nb: 0% bis 0,050%,
V: 0% bis 0,500%,
W: 0% bis 0,500%,
Cr: 0% bis 1,00%,
Mo: 0% bis 0,50%,
Co: 0% bis 1,000%,
Ni: 0% bis 1,00%,
Cu: 0% bis 1,00%,
REM: 0% bis 0,0100%,
Zr: 0% bis 0,0500%,
Ca: 0% bis 0,0100%,
Mg: 0% bis 0,0100%,
As: 0% bis 0,100%,
Sn: 0% bis 0,50%,
Sb: 0% bis 0,50% und
ein Rest: Fe und Verunreinigungen,
wobei eine Mikrostruktur an einer Position bei 1/4 der Tiefe, die in einem Bereich von 1/8 bis 3/8 einer Blechdicke in einer Blechdickenrichtung von der Oberfläche des Basisstahlblechs liegt, enthält, als Volumenanteil
Ferrit: 20% bis 95% und
Perlit: 5% bis 80%,
wobei die verbleibende Struktur Bainit umfasst,
wobei die Volumenanteile von Ferrit, Bainit und Perlit gemäß dem in der Beschreibung beschriebenen Verfahren gemessen werden,
wobei die verzinkte Schicht eine Beschichtungsmenge von 90 g/m² oder mehr aufweist, und
wobei, wenn ein Maximalwert eines B-Gehalts in der verzinkten Schicht Bps und ein B-Gehalt an der Position bei 1/4 der Tiefe des Basisstahlblechs Bqs ist, Bps das 1,2-fache oder mehr von Bqs beträgt, wobei Bqs und Bps wie in der Beschreibung dargelegt gemessen werden.

2. Stahlblech zum Warmprägen nach Anspruch 1,
wobei eine chemische Zusammensetzung der verzinkten Schicht, bezogen auf die Masse, aufweist
Fe: weniger als 9,0 %.

3. Stahlblech zum Warmprägen nach Anspruch 1 oder 2,
wobei die chemische Zusammensetzung des Basisstahlblechs in Masse-% einen oder mehrere Bestandteile enthält, ausgewählt aus der Gruppe bestehend aus
Nb: 0,005% bis 0,050%,
V: 0,005% bis 0,500%,
W: 0,005% bis 0,500%,
Cr: 0,01% bis 1,00%,
Mo: 0,01% bis 0,50%,
Co: 0,01% bis 1,000%,
Ni: 0,01% bis 1,00%,
Cu: 0,01% bis 1,00%,
REM: 0,0003% bis 0,0100%,
Zr: 0,0003% bis 0,0500%,
Ca: 0,0003% bis 0,0100%,
Mg: 0,0003% bis 0,0100%,
As: 0,001% bis 0,100%,
Sn: 0,01% bis 0,50% und
Sb: 0,01% bis 0,50%.

4. Verfahren zur Herstellung eines Stahlblechs zum Warmprägen nach einem der Ansprüche 1 bis 3, umfassend:
Gießen eines Stahlblocks oder einer Bramme, die chemischen Komponenten aufweist, umfassend, in Masse-%, C: 0,030% bis 0,600%, Si: 0,01% bis 1,50%, Mn: 0,10% bis 2,50%, Al: 0,001% bis 0,100%, Ti: 0,010% bis 0,100%, B: 0,0005% bis 0,0100%, P: 0,100% oder weniger, S: 0,0100% oder weniger, N: 0,0150% oder weniger, O: 0,0100% oder weniger, Nb: 0% bis 0,050%, V: 0% bis 0,500%, W: 0% bis 0,500%, Cr: 0% bis 1,00%, Mo: 0% bis 0,50%, Co: 0% bis 1,000%, Ni: 0% bis 1,00%, Cu: 0% bis 1,00%, REM: 0% bis 0,0100%, Zr: 0% bis 0,0500%, Ca: 0% bis 0,0100%, Mg: 0% bis 0,0100%, As: 0% bis 0,100%, Sn: 0% bis 0,50%, Sb: 0% bis 0,50%, und einen Rest: Fe und Verunreinigungen;
Erwärmen des Stahlblocks oder der Bramme auf 1.100°C oder mehr und Warmwalzen des erwärmten Stahlblocks oder der Bramme, sodass die Endwalztemperatur 800°C oder mehr beträgt, um ein warmgewalztes Stahlblech zu erhalten;
Aufwickeln des warmgewalzten Stahlblechs nach dem Warmwalzen in einem Temperaturbereich von 600°C oder darunter;
Beizen des warmgewalzten Stahlblechs nach dem Aufwickeln, und anschließendes Durchführen von Kaltwalzen mit einer kumulativen Walzreduktion von 30% bis 80%, um ein kaltgewalztes Stahlblech zu erhalten;
Durchführen eines Glühens, indem das kaltgewalzte Stahlblech 30 Sekunden oder länger in einem Glühofen gehalten wird, in dem ein Sauerstoffpotenzial in einer Atmosphäre -1,20 bis -0,50 und eine Temperatur der Atmosphäre 650°C bis 800°C beträgt, und Abkühlen des Stahlblechs, sodass die Oberflächentemperatur des Stahlblechs 500°C bis 400°C beträgt;
Durchführen eines Überziehens, indem das kaltgewalzte Stahlblech nach dem Glühen in ein Überzugsbad getaucht wird, um eine verzinkte Schicht mit einer Beschichtungsmenge von 90 g/m² oder mehr zu bilden; und
Abkühlen des kaltgewalzten Stahlblechs nach dem Überziehen auf 50°C oder weniger.

5. Warmgeprägter Formkörper, umfassend:
ein Basisstahlblech; und
eine Überzugsschicht, die Zn und Fe enthält und auf einer Oberfläche des Basisstahlblechs ausgebildet ist,
wobei das Basisstahlblech, in Masse-%, eine chemische Zusammensetzung aufweist, die umfasst
C: 0,030% bis 0,600%,
Si: 0,01% bis 1,50%,
Mn: 0,10% bis 2,50%,
Al: 0,001% bis 0,100%,
Ti: 0,010% bis 0,100%,
B: 0,0005% bis 0,0100%,
P: 0,100% oder weniger,
S: 0,0100% oder weniger,
N: 0,0150% oder weniger,
O: 0,0100% oder weniger,
Nb: 0% bis 0,050%,
V: 0% bis 0,500%,
W: 0% bis 0,500%,
Cr: 0% bis 1,00%,
Mo: 0% bis 0,50%,
Co: 0% bis 1,000%,
Ni: 0% bis 1,00%,
Cu: 0% bis 1,00%,
REM: 0% bis 0,0100%,
Zr: 0% bis 0,0500%,
Ca: 0% bis 0,0100%,
Mg: 0% bis 0,0100%,
As: 0% bis 0,100%,
Sn: 0% bis 0,50%,
Sb: 0% bis 0,50%, und
ein Rest: Fe und Verunreinigungen,
wobei eine Mikrostruktur an einer Position bei 1/4 der Tiefe, die in einem Bereich von 1/8 bis 3/8 einer Blechdicke in einer Blechdickenrichtung von der Oberfläche des Basisstahlblechs liegt, enthält, als Volumenanteil
Martensit: 5% bis 100% und
Ferrit: 0% bis 95%,
wobei die verbleibende Struktur eine oder beide von Bainit und Perlit umfasst,
wobei die Volumenanteile von Martensit, Ferrit, Bainit und Perlit gemäß dem in der Beschreibung beschriebenen Verfahren gemessen werden,
wobei eine Γ-Schicht in der Überzugsschicht, in Masse-%, eine chemische Zusammensetzung aufweist, die umfasst:
Al: 0% bis 1,00%,
Fe: 9,0 bis 30,0%,
Si: 0% bis 1,0%,
Mg: 0% bis 0,5%,
Mn: 0% bis 0,5%,
Pb: 0% bis 0,5%,
Sb: 0% bis 0,5%,
Ni: 0% bis 5,0%,
Co: 0% bis 5,0%,
Mn: 0% bis 5,0%,
P: 0% bis 0,5%,
B: 0,0005% bis 0,0500% und
ein Rest: Zn und Verunreinigungen,
wobei die Γ-Schicht eine Beschichtungsmenge von 40 g/m² oder mehr aufweist, und
wobei, wenn ein Maximalwert eines B-Gehalts in Masse-% in der Überzugsschicht Bp ist und ein B-Gehalt an einer Position bei 1/4 der Tiefe des Basisstahlblechs in Masse-% Bq ist, Bp das 1,2-fache oder mehr von Bq beträgt, wobei die Γ-Schicht, Bq und Bp wie in der Beschreibung dargelegt gemessen werden.

6. Warmgeprägter Formkörper nach Anspruch 5,
wobei die chemische Zusammensetzung des Basisstahlblechs in Masse-% einen oder mehrere Bestandteile enthält, ausgewählt aus der Gruppe bestehend aus
Nb: 0,005% bis 0,050%,
V: 0,005% bis 0,500%,
W: 0,005% bis 0,500%,
Cr: 0,01% bis 1,00%,
Mo: 0,01% bis 0,50%,
Co: 0,01% bis 1,000%,
Ni: 0,01% bis 1,00%,
Cu: 0,01% bis 1,00%,
REM: 0,0003% bis 0,0100%,
Zr: 0,0003% bis 0,0500%,
Ca: 0,0003% bis 0,0100%,
Mg: 0,0003% bis 0,0100%,
As: 0,001% bis 0,100%,
Sn: 0,01% bis 0,50% und
Sb: 0,01% bis 0,50%.

## Revendications

1. Tôle d'acier pour estampage à chaud, comprenant :
une tôle d'acier de base ; et
une couche galvanisée formée sur une surface de la tôle d'acier de base, la couche galvanisée présentant, en % en masse, une composition chimique comprenant :
B : 0,0005 % à 0,0500 %,
Al : 0 % à 1,00 %,
Fe : 0,1 % à 20,0 %,
Si : 0 % à 1,0 %,
Mg : 0 à 0,5 %,
Mn : 0 à 0,5 %,
Pb : 0 à 0,5 %,
Sb : 0 à 0,5 %,
et le reste : Zn et impuretés,
où la tôle d'acier de base présente, en % en masse, une composition chimique comprenant :
C : 0,030 % à 0,600 %,
Si : 0,01 % à 1,50 %,
Mn : 0,10 % à 2,50 %,
Al : 0,001 % à 0,100 %,
Ti : 0,010 % à 0,100 %,
B : 0,0005 % à 0,0100 %,
P : 0,100 % ou moins,
S : 0,0100 % ou moins,
N : 0,0150 % ou moins,
O : 0,0100 % ou moins,
Nb : 0 % à 0,050 %,
V : 0 % à 0,500 %,
W : 0 % à 0,500 %,
Cr : 0 % à 1,00 %,
Mo : 0 % à 0,50 %,
Co : 0 % à 1,000 %,
Ni : 0 % à 1,00 %,
Cu : 0 % à 1,00 %,
terres rares : 0 % à 0,0100 %,
Zr : 0 % à 0,0500 %,
Ca : 0 % à 0,0100 %,
Mg : 0 % à 0,0100 %,
As : 0 % à 0,100 %,
Sn : 0 % à 0,50 %,
Sb : 0 % à 0,50 %, et
le reste : Fe et impuretés,
où une microstructure à une position à 1/4 de profondeur qui se trouve dans une plage de 1/8^{ème} à 3/8^{ème} de l'épaisseur de la tôle dans le sens de l'épaisseur de la tôle à partir de la surface de la tôle d'acier de base contient, en fraction volumique,
ferrite : 20 % à 95 % et
perlite : 5 % à 80 %,
le reste de la structure comprenant de la baïnite,
où les fractions volumiques de ferrite, de baïnite et de perlite sont mesurées selon la méthode décrite dans la description,
où la couche galvanisée présente une masse de revêtement de 90 g/m² ou plus, et
où, lorsqu'une valeur maximale d'une teneur en B dans la couche galvanisée est Bps et une teneur à la position à 1/4 de profondeur de la tôle d'acier de base est Bqs, Bps est égale à 1,2 fois Bqs ou plus, Bqs et Bps étant mesurées comme indiqué dans la description.

2. Tôle d'acier pour estampage à chaud selon la revendication 1,
où une composition chimique de la couche galvanisée comprend, en termes de masse,
Fe : moins de 9,0 %.

3. Tôle d'acier pour estampage à chaud selon la revendication 1 ou la revendication 2,
où la composition chimique de la tôle d'acier de base contient, en % en masse, un ou plusieurs éléments choisis dans le groupe constitué de
Nb : 0,005 % à 0,050 %,
V : 0,005 % à 0,500 %,
W : 0,005 % à 0,500 %,
Cr : 0,01 % à 1,00 %,
Mo : 0,01 % à 0,50 %,
Co : 0,01 % à 1,000 %,
Ni : 0,01 % à 1,00 %,
Cu : 0,01 % à 1,00 %,
terres rares : 0,0003 % à 0,0100 %,
Zr : 0,0003 % à 0,0500 %,
Ca : 0,0003 % à 0,0100 %,
Mg : 0,0003 % à 0,0100 %,
As : 0,001 % à 0,100 %,
Sn : 0,01 % à 0,50 %, et
Sb : 0,01 % à 0,50 %.

4. Procédé de fabrication d'une tôle d'acier pour estampage à chaud selon l'une des revendications 1 à 3, comprenant les étapes consistant à :
couler un lingot d'acier ou une brame présentant des composants chimiques comprenant, en % en masse, C : 0,030 % à 0,600 %, Si : 0,01 % à 1,50 %, Mn : 0,10 % à 2,50 %, Al : 0,001 % à 0,100 %, Ti : 0,010 % à 0,100 %, B : 0,0005 % à 0,0100 %, P : 0,100 % ou moins, S : 0,0100 % ou moins, N : 0,0150 % ou moins, O : 0,0100 % ou moins, Nb : 0 % à 0,050 %, V : 0 % à 0,500 %, W : 0 % à 0,500 %, Cr : 0 % à 1,00 %, Mo : 0 % à 0,50 %, Co : 0 % à 1,000 %, Ni : 0 % à 1,00 %, Cu : 0 % à 1,00 %, terres rares : 0 % à 0,0100 %, Zr : 0 % à 0,0500 %, Ca : 0 % à 0,0100 %, Mg : 0 % à 0,0100 %, As : 0 % à 0,100 %, Sn : 0 % à 0,50 %, Sb : 0 % à 0,50 %, et le reste : Fe et impuretés ;
chauffer le lingot d'acier ou la brame à 1100 °C ou plus et laminer à chaud le lingot d'acier ou la brame chauffé(e) de telle sorte qu'une température de fin de laminage soit de 800 °C ou plus pour obtenir une tôle d'acier laminée à chaud ;
enrouler en bobines la tôle d'acier laminée à chaud après le laminage à chaud dans une plage de température de 600 °C ou moins ;
décaper la tôle d'acier laminée à chaud après l'enroulement en bobines puis effectuer un laminage à froid à une réduction de laminage cumulée de 30 % à 80 % pour obtenir une tôle d'acier laminée à froid ;
effectuer un recuit en maintenant la tôle d'acier laminée à froid dans un four de recuit dans lequel un potentiel d'oxygène dans une atmosphère est de -1,20 à -0,50 et une température de l'atmosphère va de 650 °C à 800 °C, pendant 30 secondes ou plus et refroidir la tôle d'acier de telle sorte que la température de surface de la tôle d'acier soit de 500 °C à 400 °C ;
effectuer une galvanoplastie par immersion de la tôle d'acier laminée à froid après le recuit dans un bain de galvanoplastie pour former une couche galvanisée avec une masse de revêtement de 90 g/m² ou plus ; et
refroidir la tôle d'acier laminée à froid après la galvanoplastie à 50 °C ou moins.

5. Corps façonné par estampage à chaud, comprenant :
une tôle d'acier de base ; et
une couche de galvanoplastie contenant du Zn et du Fe et formée sur une surface de la tôle d'acier de base,
où la tôle d'acier de base présente, en % en masse, une composition chimique comprenant :
C : 0,030 % à 0,600 %,
Si : 0,01 % à 1,50 %,
Mn : 0,10 % à 2,50 %,
Al : 0,001 % à 0,100 %,
Ti : 0,010 % à 0,100 %,
B : 0,0005 % à 0,0100 %,
P : 0,100 % ou moins,
S : 0,0100 % ou moins,
N : 0,0150 % ou moins,
O : 0,0100 % ou moins,
Nb : 0 % à 0,050 %,
V : 0 % à 0,500 %,
W : 0 % à 0,500 %,
Cr : 0 % à 1,00 %,
Mo : 0 % à 0,50 %,
Co : 0 % à 1,000 %,
Ni : 0 % à 1,00 %,
Cu : 0 % à 1,00 %,
terres rares : 0 % à 0,0100 %,
Zr : 0 % à 0,0500 %,
Ca : 0 % à 0,0100 %,
Mg : 0 % à 0,0100 %,
As : 0 % à 0,100 %,
Sn : 0 % à 0,50 %,
Sb : 0 % à 0,50 %, et
le reste : Fe et impuretés,
où une microstructure à une position à 1/4 de profondeur qui se trouve dans une plage de 1/8^{ème} à 3/8^{ème} de l'épaisseur de la tôle dans le sens de l'épaisseur de la tôle à partir de la surface de la tôle d'acier de base contient, en fraction volumique,
martensite : 5 % à 100 % et
ferrite : 0 % à 95 %,
la structure restante comprenant un ou deux parmi la baïnite et la perlite,
où les fractions volumiques de martensite, de ferrite, de baïnite et de perlite sont mesurées selon la méthode décrite dans la description,
où une couche Γ dans la couche de placage présente, en % en masse, une composition chimique comprenant :
Al : 0 % à 1,00 %,
Fe : 9,0 à 30,0 %,
Si : 0 % à 1,0 %,
Mg : 0 % à 0,5 %,
Mn : 0 % à 0,5 %,
Pb : 0 % à 0,5 %,
Sb : 0 % à 0,5 %,
Ni : 0 à 5,0 %,
Co : 0 % à 5,0 %,
Mn : 0 % à 5,0 %,
P : 0 % à 0,5 %,
B : 0,0005 % à 0,0500 %, et
le reste : Zn et impuretés,
où la couche Γ présente une masse de revêtement de 40 g/m² ou plus, et
où, lorsqu'une valeur maximale d'une teneur en B en % en masse dans la couche de galvanoplastie est Bp et une teneur en B à une position à 1/4 de profondeur de la tôle d'acier de base en % en masse est Bq, Bp est égale à 1,2 fois ou plus Bq, la couche Γ, Bq et Bp étant mesurées comme indiqué dans la description.

6. Corps façonné par estampage à chaud selon la revendication 5,
où la composition chimique de la tôle d'acier de base contient, en % en masse, un ou plusieurs éléments choisis dans le groupe constitué par :
Nb : 0,005 % à 0,050 %,
V : 0,005 % à 0,500 %,
W : 0,005 % à 0,500 %,
Cr : 0,01 % à 1,00 %,
Mo : 0,01 % à 0,50 %,
Co : 0,01 % à 1,000 %,
Ni : 0,01 % à 1,00 %,
Cu : 0,01 % à 1,00 %,
terres rares : 0,0003 % à 0,0100 %,
Zr : 0,0003 % à 0,0500 %,
Ca : 0,0003 % à 0,0100 %,
Mg : 0,0003 % à 0,0100 %,
As : 0,001 % à 0,100 %,
Sn : 0,01 % à 0,50 %, et
Sb : 0,01 % à 0,50 %.
